# EUROPÄISCHE PATENTSCHRIFT

(11) **EP 3 834 373 B1**
(45) Veröffentlichungstag und Bekanntmachung des Hinweises auf die Patenterteilung: **26.07.2023**
(21) Anmeldenummer: 19779390.4
(22) Anmeldetag: 18.09.2019
(51) Int. Cl.: H04L 41/08, G06F 9/455, H04L 67/12

(54) **VERFAHREN ZUM AUTOMATISCHEN KONFIGURIEREN EINES SYSTEMS, SYSTEM UND COMPUTERLESBARES MEDIUM**
METHOD FOR AUTOMATICALLY CONFIGURING A SYSTEM, SYSTEM AND COMPUTER READABLE MEDIUM
PROCÉDÉ DE CONFIGURATION AUTOMATIQUE D'UN SYSTÈME, SYSTÈME ET SUPPORT LISIBLE PAR ORDINATEUR

(30) Priorität: 12.10.2018 EP 18200134
(43) Veröffentlichungstag der Anmeldung: 16.06.2021
(73) Patentinhaber: Siemens Aktiengesellschaft, 80333 München (DE)
(72) Erfinder: ALBRECHT, Harald, 90475 Nürnberg (DE); HÖME, Stephan, 91126 Schwabach (DE); TALANIS, Thomas, 91336 Heroldsbach (DE)
(74) Vertreter: Siemens Patent Attorneys
(86) Internationale Anmeldenummer: PCT/EP2019/074941
(87) Internationale Veröffentlichungsnummer: WO 2020/074225

(56) Entgegenhaltungen:
- CN-A- 108 282 376
- US-A1- 2018 287 883
- VAN ROSSEM STEVEN ET AL: "NFV service dynamicity with a DevOps approach: Insights from a use-case realization", 2017 IFIP/IEEE SYMPOSIUM ON INTEGRATED NETWORK AND SERVICE MANAGEMENT (IM), IFIP, 8. Mai 2017 (2017-05-08), Seiten 674-679, XP033127640, DOI: 10.23919/INM.2017.7987357 [gefunden am 2017-07-20]
- Ahmed Elgamil: "Templating your Dockerfile like a boss!", , 29. Dezember 2016 (2016-12-29), XP055579167, Gefunden im Internet: URL:https://blog.dockbit.com/templating-yo ur-dockerfile-like-a-boss-2a84a67d28e9 [gefunden am 2019-04-09]
- Mark Church: "Docker Reference Architecture: Designing Scalable, Portable Docker Container Networks", , 20. Juni 2017 (2017-06-20), Seiten 1-37, XP055507040, Gefunden im Internet: URL:https://success.docker.com/api/article s/networking/pdf [gefunden am 2018-09-13]

## Beschreibung

Die Erfindung betrifft ein Verfahren zum automatischen Konfigurieren eines Systems, insbesondere eines Automatisierungssystems. Darüber hinaus betrifft die Erfindung ein System, insbesondere Automatisierungssystem, zur Durchführung eines solchen Verfahrens, und ein computerlesbares Medium.

Automatisierungssysteme insbesondere für industrielle Automatisierungsanlagen, zum Beispiel speicherprogrammierbare Steuerungen, Industrie-PCs oder dergleichen, besitzen in der Regel eine oder auch mehrere Netzwerk-Schnittstellen, bei denen es sich sowohl um physikalische Hardware-Netzwerk-Schnittstellen als auch um virtuelle Hardware-Netzwerk-Schnittstellen, zum Beispiel einer virtuellen Maschine, handeln kann. Verschiedene Systeme aus dem Bereich der Automatisierungstechnik können bereits ab Werk mit unterschiedlichen solcher Netzwerkschnittstellen ausgerüstet sein und es ist auch möglich, dass Anwender den Ausbau an physikalischen und/oder virtuellen Hardware-Netzwerk-Schnittstellen später ändern, etwa eine oder mehrere solcher Schnittstellen hinzufügen oder entfernen.

Im Betrieb sind die Schnittstellen an verschiedene Netzwerke angeschlossen. Beispielsweise kann eine solche Schnittstelle an einem Fabrik- oder Firmennetzwerk eines Betreibers angeschlossen sein, eine oder mehrere Schnittstellen an untergeordneten Maschinen- oder Zellennetzwerken, sowie eine oder mehrere Schnittstellen an (lokalen) Drahtlosnetzwerken usw. Anwender möchten sowohl bei einer Erstinbetriebnahme als auch im laufenden Betrieb, wenn eine Änderung des Hardwareausbaus an Schnittstellen erfolgt, möglichst rasch und einfach eine durchgängige Konnektivität zwischen den verschiedenen Netzen, beispielsweise einem Firmen- bzw. Produktionsnetz, unterlagerten Zellen- oder Maschinennetzen und einem Drahtlosnetzwerk, herstellen bzw. erhalten - und zwar entsprechend des von ihnen gewählten bzw. vorgenommenen bzw. geänderten Hardwareausbaus an Schnittstellen.

Die Netzwerkkonnektivität soll sich dabei möglichst nahtlos einerseits in die Belange industrieller Produktionsstätten einfügen, zugleich aber auch mit Firmen-IT harmonieren, beispielsweise mit IPv6-Routern, die auch autokonfigurierend ausgestaltet sein können, wie beispielsweise in der EP 2 940 972 A1 und der EP 3 091 714 A1 vorgesehen, und/oder mit NAT64-Routern, die adaptiv ausgestaltet sein können, wie beispielsweise in der EP 3 062 490 A1 vorgesehen.

Im Bereich der allgemeinen IT hat sich die so genannte Container-Technologie, wie beispielsweise "Docker" oder "rkt" (gesprochen "rocket") oder "Kubernetes" bewährt (siehe https://www.docker.com bzw. EP 3 267 351 A1, https://coreos.com/rkt/, https://kubernetes.io/).

Anwendungs-Container stellen in der Regel "abgekapselte" Einheiten dar, die unabhängig voneinander ausgeführt werden können, egal wo sie sich befinden. Ähnlich wie bei virtuellen Maschinen sind Container eine Art Behälter für Anwendungen, in denen diese laufen können. Während virtuelle Maschinen jedoch eine ganze Computerumgebung abbilden, enthalten die Container üblicherweise lediglich die wichtigen Daten, die für die Ausführung der jeweiligen Anwendung bzw. Anwendungen benötigt werden.

Die Container-Technologien bzw. Containerisierung ermöglichen es insbesondere, eine Software bzw. Anwendung in einem Container zu verpacken, der alles umfasst, was sie zum Laufen braucht, beispielsweise Programmcode, Laufzeit, System-Tools und/oder Systembibliotheken.

Die Container-Technologien bzw. Containerisierung erlauben es, Funktionen einfach und bequem modular zu verpacken, zu transportieren und schließlich in den operativen Bereich auszurollen. Klassische Einsatzgebiete von Containern liegen beispielsweise darin Applikationen, etwa eine Datenbank oder einen Web-Front-End, bequem zu verpacken.

Ein Container wird in der Regel von einem Container Image, im Falle von Docker beispielswiese einem Docker Image, erzeugt (instanziert), welches als Daten-Template dient.

Nach Auffassung der Anmelderin hat die Container-Virtualisierung auch im Bereich der Automatisierungstechnik ein großes Potential. Denkbar ist beispielsweise, im Bereich der Automatisierungstechnik (virtuelle) Netzwerkfunktionen insbesondere zum Erhalt von Konnektivität, etwa bei Änderungen des Hardwareausbaus, und/oder weitere Netzwerkfunktionen, containerisiert bereitzustellen bzw. zu nutzen.

Damit solche Container mit (virtuellen) Netzwerkfunktionen überhaupt einsatzbereit sind bzw. werden, müssen sie jedoch mit angeschlossenen Netzwerken bzw. Schnittstellen, die mit den Netzwerken verbunden sind, "verschaltet" bzw. "verdrahtet" werden.

Der Anmelderin ist bekannt, dass zum Verschalten von Virtuellen Maschinen (VMs) und Containern Software-Switches zum Einsatz kommen können, die auch "virtuelle" Switche genannt werden (siehe beispielsweise https://wiki.linuxfoundation.org/networking/bridge sowie https://wiki.debian.org/BridgeNetworkConnections). Solche Software-Switches sind beispielsweise Teil des Linux-Kernels und können jederzeit im laufenden Betrieb hinzugefügt, verändert und auch wieder gelöscht werden, wofür jedoch nicht unerhebliches IT- bzw. Netzwerk-Know-How erforderlich ist. Solche virtuellen Switche können beispielsweise bei Linux explizit in Form sogenannter Kernel-Bridges auftreten (siehe beispielswiese die vorangegangenen Verweise zum Stand der Technik). Sie können aber beispielsweise auch implizit Teil eines virtuellen Netzwerkes zwischen einer Hardware-Netzwerk-schnittstelle (den sog. Master-Schnittstellen) und weiteren virtuellen Macvlan-Netzwerk-Schnittstellen sein (siehe beispielsweise http://hicu.be/bridge-vs-macvlan sowie zu Macvlans im Allgemeinen:
https://docs.docker.com/network/macvlan/ und
https://sreeninet.wordpress.com/2016/05/29/macvlan-andipvlan/ und
https://github.com/docker/libnetwork/commit/dc12a0f09b20015fb ea55ac20cfc892b5ab91259#diff-e3e055a269aa170439b408dbcd4ealb7 ).

Die Docker-Technologie kennt weiterhin sogenannte "Docker Network Drivers" mit dem "Container Network Model", siehe dazu beispielsweise https://docs.docker.com/network/#networkdrivers und https://blog.docker.com/2016/12/understandingdocker-networking-drivers-use-cases/. Diese Docker Network Drivers erfordern jedoch von einem Anwender, dass er eine topologische Beschreibung der benötigten Netzwerke und deren Verschaltung bereitstellt, was ebenfalls nicht unbeachtliches IT- bzw. Netzwerk-Know-How erfordert und mit nicht unerheblichem Aufwand verbunden ist.

Auf den Docker Network Drivers aufbauend existiert weiterhin die Technologie "Docker Compose" (siehe https://docs.docker.com/compose/). Hierbei handelt es sich um ein Werkzeug, um Applikationen zu beschreiben, die insbesondere aus mehreren Docker-Containern bestehen, inklusive deren "Netzwerk-Verdrahtung". Allerdings kann Docker Compose lediglich eines oder mehrere Netzwerke referenzieren, die zuvor mittels Docker Driver definiert bzw. angelegt und konfiguriert wurden. Im Falle einer Bridge beispielsweise wird die Bridge angelegt, bei einem Macvlan wird vermerkt, dass dieses Netzwerk definiert wurde, es werden aber noch keine konkreten Netzwerkelemente erzeugt. Das bedeutet, dass bei Macvlan das Verdrahten erst später erfolgt, während bei einer Bridge schon die Teile angelegt werden, die unabhängig vom einzelnen Container benötigt werden.

In VAN ROSSEM STEVEN ET AL: "NFV service dynamicity with a DevOps approach: Insights from a use-case realization", IFIP/IEEE SYMPOSIUM ON INTEGRATED NETWORK AND SERVICE MANAGEMENT, 8. Mai 2017, Seiten 674-679, XP033127640 wird im Kontext von NFV (Network Function Virtualization) und SDN (Software Defined Networking)beschrieben, wie Services dynamisch mittels Virtualisierungtechniken, wie z.B. Docker bereitgestellt und angepasst werden können.

Nach Auffassung der Anmelderin spielt bei der Containerisierung von (virtuellen) Netzwerkfunktionen nicht nur deren Einbindung in das externe, physikalische Netzwerk eine wichtige Rolle, sondern auch das korrekte Verdrahten der Container untereinander und mit der Netzwerk-Außenwelt.

Der Anmelderin ist bekannt, dass ein solches Verdrahten bisher in dem durch modulare Hardware geprägten Automatisierungsbereich durch das Stecken geeigneter Funktionsmodule in einer physischen Hardware-Steuerung, wie beispielsweise einer S7-1500 der Siemens AG, realisierbar wäre. Auch hier muss ein Anwender eingreifen, über entsprechendes Know-How Verfügen und es ist zusätzliche Hardware erforderlich.

Es ist daher eine Aufgabe der vorliegenden Erfindung, eine Möglichkeit dafür zu schaffen, dass eine Verdrahtung von Containern mit (virtuellen) Netzwerkfunktionen untereinander und mit externen, physikalischen Netzwerken für den Anwender automatisiert und ohne Aufwand erfolgt.

Die vorliegende Erfindung schließt mit anderen Worten die "Lücke" zwischen industriellen Anwendern und der Container-Technologie, wie beispielsweise Docker. So wird es möglich, die großen Vorteile dieser Technologie für Netzwerkfunktionen nutzbar zu machen, ohne dass es seitens der Anwender eines speziellen IT- bzw. Netzwerks- bzw. Container-Know-Hows bedarf. Dabei besteht der Kerngedanke darin, unter Verwendung eines Autokonfigurationsmoduls Container mit Netzwerkfunktionen, die vorliegend auch als Netzwerkfunktions-Container bzw. Kommunikations-Container bezeichnet werden, dynamisch und automatisch mit ihrer physikalischen Netz-Außenwelt zu verbinden, wofür eine oder auch mehrere Schablonen-Dateien genutzt werden.

Erfindungsgemäß wird dem Autokonfigurationsmodul das erstmalige Erfassen einer physikalischen oder virtuellen Hardware-Netzwerkschnittstelle bei Inbetriebnahme des Systems und/oder das neue Hinzukommen und/oder Wegfallen einer physikalischen oder virtuellen Hardware-Netzwerkschnittstelle im Betrieb des Systems kommuniziert, indem ein auf dem System laufendes Betriebssystem dem Autokonfigurationsmodul ein entsprechendes Ereignis meldet, insbesondere als Plug-and-Play-Ereignis. Auf diese Weise kann das Autokonfigurationsmodul auf einfachem Wege über den Hardware-Schnittstellen-Ausbau bzw. Änderungen dieses informiert werden. Das erfindungsgemäße System ist in Weiterbildung entsprechend ausgebildet und/oder eingerichtet.

Das erfindungsgemäß zum Einsatz kommende Autokonfigurationsmodul ermittelt und überwacht den Hardware-Systemausbau um damit die Systemkonfiguration in Bezug auf die verfügbaren Hardware-Netzwerkschnittstellen. Hardware-Netzwerkschnittstellen können dabei sowohl in Form von physikalischen Hardware-Netzwerkschnittstellen als auch in Form von virtuellen Hardware-Netzwerkschnittstellen vorliegen. Bei einer Hardware-Netzwerkschnittstelle im Sinne der vorliegenden Anwendung handelt es sich insbesondere um eine solche, für die wenigstens ein Treiber, insbesondere wenigstens ein Betriebssystem-Treiber vorgesehen ist.

Selbstverständlich kann es sein, dass über die Betriebsdauer eines Systems mehrmals eine Hardware-Netzwerkschnittstelle ergänzt und/oder entfernt und/oder bei Inbetriebnahme eines Systems mehrere Hardware-Netzwerkschnittstellen erstmalig erfasst werden. Dann wird bevorzugt mehrmals, gegebenenfalls auch jedes Mal, wenn eine Netzwerkschnittstelle bei Inbetriebnahme des Systems erstmals erfasst wird, und/oder jedes Mal, wenn eine physikalische oder virtuelle Hardware-Netzwerkschnittstelle im Betrieb des Systems neu hinzukommt oder wegfällt, dies dem Autokonfigurationsmodul des Systems zusammen mit einer Information über die Art der jeweils betroffenen Hardware-Netzwerkschnittstelle und die Art eines mit dieser verbundenen oder zu verbindenden Netzwerkes kommuniziert, und mehrmals, gegebenenfalls auch jedes Mal bei einer solchen Meldung unter Verwendung einer bevorzugt auf dem System gespeicherten, der Art der jeweils betroffenen Hardware-Netzwerkschnittstelle und der Art eines mit dieser verbundenen oder zu verbindenden Netzwerkes zugeordneten Schablonen-Datei eine Container-Konfigurationsbeschreibung erstellt und umgesetzt bzw. ausgeführt. Das erfindungsgemäße System ist hierzu bevorzugt ausgebildet und/oder eingerichtet.

Neben der Information darüber, dass eine Änderung hinsichtlich der Schnittstellen stattgefunden hat bzw. eine Schnittstelle bei Inbetriebnahme erstmalig erfasst wird, erhält das Autokonfigurationsmodul auch Informationen über die Art der Schnittstelle. Insbesondere wird kommuniziert, welche Rolle der Schnittstelle zukommt bzw. welchen Typ diese hat. Das ermöglicht beispielsweise die Rolle "upstream" oder "enterprise-network" anstatt der u.U. variierenden Netzwerk-Schnittstellen-Namen wie beispielsweise "ens42p66". Diese Rolle bzw. dieser Typ kann beispielsweise explizit anstatt eines Schnittstellen-Namens in einer Schablone gefordert sein (in einer solchen kann es beispielsweise "role: ..." anstatt "device: ..." heißen) .

Das Autokonfigurationsmodul zieht dann eine zu der Art der Schnittstelle gehörige Schablonen-Datei heran und erstellt unter Verwendung dieser eine zu der Art der betroffenen Schnittstelle gehörige Container-Konfigurationsbeschreibung. So kann eine dynamische, Kontext-abhängige Konfiguration des Systems erfolgen.

Die Container-Konfigurationsbeschreibung mit deren Teilkonfigurationsbeschreibungen wird im Anschluss an deren Erstellung ausgeführt bzw. umgesetzt und der wenigstens eine Kommunikations-Container wird erzeugt und mit der wenigstens einen betroffenen Hardware-Schnittstelle verbunden. Alternativ zu dem Ausdruck Konfigurationsbeschreibung könnte auch der Ausdruck Konfigurationsanweisung verwendet werden.

Die Ausführung bzw. Umsetzung bedeutet insbesondere bzw. schließt insbesondere mit ein, dass die Container-Konfigurationsbeschreibung bzw. deren Teile von wenigstens einer geeigneten Instanz, die auf dem System implementiert sein kann, verarbeitet wird bzw. werden. Es kann sein, dass der erste Teil von einer Instanz und der zweite Teil von einer anderen Instanz ausgeführt, insbesondere verarbeitet wird. Eine Container-Konfigurationsbeschreibung kann beispielsweise in Form einer Textdatei bzw. eines Textdokumentes gegeben sein, die insbesondere Anweisungen bzw. Kommandos umfasst, die von einer oder auch mehreren geeigneten Instanzen ausgeführt, insbesondere verarbeitet werden können.

Dabei umfasst die Container-Konfigurationsbeschreibung wenigstens zwei Teilkonfigurationsbeschreibungen.

Konkret eine erste, welche den oder die gewünschten bzw. erforderlichen Kommunikations-Container betrifft. Diese erste Teilkonfigurationsbeschreibung wird zwecks weiterer Verarbeitung in einem Container-System, wie beispielsweise Docker Compose und/oder Kubernetes, erstellt. Mit anderen Worten wird eine erste Teilkonfigurationsbeschreibung erstellt, die ausgestaltet bzw. geeignet ist, um (anschließend) von einem Container-System, wie beispielsweise Docker Compose und/oder Kubernetes, verarbeitet zu werden. Die erste Teilkonfigurationsbeschreibung ist ausgestaltet bzw. geeignet, um mittels eines solchen Werkzeuges aus dieser bzw. auf Basis dieser wenigstens einen Kommunikations-Container zu erzeugen. Die erste Teilkonfiguration kann insbesondere wenigstens eine Referenz bzw. wenigstens einen Verweis auf wenigstens einen Container bzw. ein Container-Image umfassen. Es kann auch nur ein Image-Name wenigstens eines Kommunikations-Containers in der ersten Teilkonfigurationsbeschreibung enthalten sein. Die jeweilige Betriebssystemkonfiguration kann dann den oder die Image-Namen noch mit dem Ort (etwa der URL) einer oder mehrerer sogenannter Image-Registries vervollständigen, sobald das Container-Image auf das System geladen werden muss, damit einer oder mehrere Container aus dem Image erzeigt werden bzw. werden können. Eine Referenz kann zum Beispiel in Form einer Pfad- bzw. URL-Angabe vorliegen.

Die erste Teilkonfigurationsbeschreibung kann für den Fall, dass Docker Compose als Instanz zu deren Ausführung zum Einsatz kommt, insbesondere durch das Kommando "docker-compose <erste Teilkonfigurationsbeschreibung>" ausgeführt werden.

Für den Fall, dass Kubernetes als Instanz zur Ausführung der ersten Teilkonfigurationsbeschreibung zum Einsatz kommt, kann beispielsweise vorgesehen sein, dass ein "kubelet" auf dem System, auf dem der Container gestartet werden soll, seinerseits ein (Haupt-)CNI-Plugin startet und diesem die erste Teilkonfigurationsbeschreibung zur Ausführung übergibt. Die erste Teilkonfigurationsbeschreibung liegt insbesondere in diesem Falle bevorzugt in Form einer oder mehrerer sogenannter Kubernetes-Ressourcen vor bzw. umfasst solche. Bei diesen handelt es sich um (kleine) Textdokumente, die jeweils für sich eine oder mehrere Teile der Container- und Netzwerkkonfiguration beschreiben und durch die Kubernetes-Mechanismen ausgeführt werden. Kubernetes-Ressourcen können von entsprechenden Controllern bzw. Plugins, wie den genannten CNI-Plugins (beispielsweise Multus CNI-Plugins) ausgeführt bzw. verarbeitet werden (in diesem Zusammenhang siehe z.B. https://kubernetes.io/docs/concepts/cluster-administration/manage-deployment/ und
https://engineering.bitnami.com/articles/a-deep-dive-into-kubernetes-controllers.html und
https://github.com/intel/multus-cni). Das Haupt-CNI-Plugin kann beispielsweise durch Multus gegeben sein. Dieses kann zum Beispiel anhand seiner eigenen Konfiguration sowie der Teilkonfigurationsbeschreibung entscheiden, welche weiteren CNI-Plugins ggf. der Reihe nach aufzurufen sind, wie beispielsweise das "bridge" CNI-Plugin oder das "macvlan" CNI-Plugin. Das Haupt-CNI-Plugin kontrolliert hierbei die Weitergabe der erforderlichen Teile aus der Teilkonfigurationsbeschreibung zu den aufzurufenden CNI-Plugins.

Die zweite Teilkonfigurationsbeschreibung beschreibt die erforderlichen virtuellen Netzwerkfunktionen, wie beispielsweise virtuelle, insbesondere Software-(Ethernet-)Bridges, die für das Verbinden des oder der Kommunikations-Container mit der bzw. der jeweils betroffenen Schnittstelle erforderlich sind. Die zweite Teilkonfigurationsbeschreibung betrifft insbesondere virtuelle Netzwerkinfrastruktur eines Betriebssystems des Systems bzw. dient der Einrichtung solcher. Alternativ oder zusätzlich zu virtuellen, insbesondere Software-(Ethernet-)Bridges kann es sich auch um virtuelle "Kabel" bzw. virtuelle Ethernet-Systeme handeln, insbesondere sogenannte VETHs bzw. VETH devices, und/oder um Macvlans (auch MACVLAN oder MAC VLAN geschrieben), die bevorzugt virtuelle Kabel bis an eine physikalische Hardware-Netzwerkschnittstelle darstellen können.

VETHs steht dabei für Virtual Ethernet Devices, wie sie beispielsweise von Linux hinlänglich vorbekannt sind. VETHs treten in der Regel paarweise auf und fungieren sozuagen als virtuelles Stück Kabel zwischen genau zwei VETH-Netzwerk-schnittstellen. Sie verbinden insbesondere eine virtuelle Bridge mit einem Container, können genauso gut aber auch zwei Container direkt miteinander verbinden. Zu VETHs siehe beispielsweise das Linux-Manual (http://man7.org/linux/manpages/man4/veth.4.html).

Die zweite Teilkonfigurationsbeschreibung betrifft zweckmäßiger Weise Netzwerkfunktionen auf Ebene des Data-Link-Layers (Layer 2), insbesondere wenigstens ein virtuelles Netzwerk auf Layer 2, also wenigstens eine virtuelles Layer-2-Netzwerk.

Es kann auch eine Verdrahtung von Kommunikations-Containern untereinander erforderlich bzw. vorgesehen und entsprechend in der Teilkonfigurationsbeschreibung berücksichtigt sein. Eine solche kann ebenfalls über die vorgenannten Mittel, beispielsweise Soft-Bridges und/oder virtuelle Kabel oder dergleichen erhalten werden.

Anhand der zweiten Teilkonfigurationsbeschreibung sorgt das Autokonfigurationsmodul dafür, dass wenigstens ein (virtuelles) internes Netzwerk, beispielsweise wenigstens ein ein internes Netzwerk bildender Software-Switch bzw. wenigstens eine Software-Bridge, anstatt mit dem Host-IP-Stack, wie es insbesondere bei Docker üblich ist, allein mit der betroffenen Schnittstelle verknüpft wird. Auch ist es möglich, anstatt einer (expliziten) Software-Bridge bzw. einem (expliziten) Software-Switch den oder die Kommunikations-Container direkt mit einer ("Master" bzw. externen) IP-Schnittstelle zu verbinden. Dann übernimmt bzw. "spielt" die IP-Schnittstelle versteckt die Bridge-Funktion.

Über die Konfigurationsbeschreibung kann bzw. soll insbesondere IP-Konnektivität für die betroffenen Schnittstelle hergestellt werden.

Das Ausführen bzw. Umsetzen der Container-Konfigurationsbeschreibung schließt mit ein, dass der wenigstens eine Kommunikations-Container erzeugt und mit der betroffenen Netzwerkschnittstelle, für welche die Container-Konfigurationsbeschreibung erstellt wurde, verbunden wird. Das Ausführen bzw. Umsetzen der Container-Konfigurationsbeschreibung schließt auch mit ein, dass der wenigstens eine Kommunikations-Container gestartet wird.

In besonders bevorzugter Ausgestaltung wird die Container-Konfigurationsbeschreibung erhalten bzw. erstellt, indem einer oder mehrere in der Schablonen-Datei vorgesehene Platzhalter durch wenigstens einen zu der (jeweils) betroffenen Hardware-Netzwerkschnittstelle gehörigen Parameter, insbesondere einen Namen dieser, ersetzt werden. Bevorzugt ist das Autokonfigurationsmodul entsprechend ausgebildet und/oder eingerichtet. Das Ersetzen von einem oder mehreren Platzhaltern in der Schablonen-Datei durch einen Schnittstellen-Parameter, insbesondere Schnittstellen-Namen stellt bevorzugt die einzige Handlung dar, die durchgeführt wird, um aus der zu der betroffenen Schnittstelle gehörigen Schablonen-Datei eine Container-Konfigurationsbeschreibung zu erhalten. Das heißt, die Schablonen-Datei stellt bevorzugt bereits die erforderliche Container-Konfigurationsbeschreibung dar, die jedoch noch um den Kontext, insbesondere die Information der konkret betroffenen Schnittstelle zu ergänzen ist, also um die Information, welche physische oder virtuelle Schnittstelle erstmals erfasst bzw. ergänzt wurde.

Das Ersetzen von Platzhaltern lässt sich sehr einfach durchführen und ermöglicht es, eine (gemeinsame) Schablone für beliebig viele Netzwerkschnittstellen zu verwenden, so lange sie sich durch die gleiche Art auszeichnen bzw. solange diesen die gleiche Rolle zukommt.

Die Information darüber, um welche Art von Schnittstelle es sich bei der (jeweils) betroffenen Schnittstelle handelt, bzw. welche Rolle dieser zukommt, wird dem Autokonfigurationsmodul kommuniziert, indem diesem wenigstens ein zu der (jeweils) betroffenen Schnittstelle gehöriger Parameter übermittelt wird, besonders bevorzugt ein zw. der zu der (jeweils) betroffenen Schnittstelle gehöriger Name. Dann werden bevorzugt bestimmte Namensregeln für die Bezeichnung er Schnittstellen verwendet. Zum Beispiel werden etwa allen Schnittstellen der gleichen Art bzw. mit der gleichen Rolle, beispielsweise allen Upstream-Schnittstellen, also Schnittstellen, die mit einem Upstream-Netzwerk verbunden oder zu verbinden sind, Namen gegeben, die mit den gleichen Anfangszeichen, etwa Anfangsbuchstaben beginnen, etwa alle mit "ens*", wobei "*" bedeutet, dass weitere Zeichen folgen, über welche die Schnittstelle von anderen Schnittstellen unterscheidbar ist.

Aus der Schablonen-Datei werden von dem Autokonfigurationsmodul insbesondere für die jeweils betroffene Schnittstelle, also kontextabhängig, die Netzwerke zwischen der jeweils betroffenen Schnittstelle und dem oder den Kommunikations-Containern in einem (einzelnen) Kontext erzeugt bzw., für den Fall, dass eine Schnittstelle wegfällt, wieder entfernt.

Es sei angemerkt, dass es erforderlich sein kann, jedoch nicht erforderlich sein muss, dass für jede virtuelle und/oder physikalische Hardware-Netzwerkschnittstelle eines Systems, die bei Inbetriebnahme des Systems erstmals erfasst wird bzw. im Betrieb des Systems neu hinzukommt, wenigstens ein Kommunikations-Container eingerichtet bzw. erhalten wird.

Sofern wenigstens eine weitere virtuelle und/oder physikalische Hardware-Netzwerkschnittstelle bei Inbetriebnahme des Systems erstmals erfasst wird bzw. im Betrieb des Systems neu hinzukommt, für welche dies nicht erforderlich bzw. gewünscht ist, kann vorgesehen sein, dass für diese von dem Autokonfigurationsmodul eine Konfigurationsbeschreibung erstellt wird, welche keinen bzw. keine Kommunikations-Container betrifft. Diese Art der Konfigurationsbeschreibung, die zur Abgrenzung gegenüber Container-Konfigurationsbeschreibungen, die wenigstens einen Container betreffen, vorliegend als Netzwerk-Konfigurationsbeschreibung bezeichnet wird, betrifft insbesondere nur Netzwerkfunktionen für die bzw. die jeweilige betroffene Schnittstelle.

Eine weitere Ausführungsform zeichnet sich entsprechend dadurch aus, dass das Autokonfigurationsmodul für wenigstens eine weitere der betroffenen Hardware-Netzwerkschnittstellen eine Netzwerk-Konfigurationsbeschreibung erstellt, die wenigstens ein virtuelles Netzwerk und/oder wenigstens eine virtuelle Bridge und/oder wenigstens einen virtuellen Switch für die wenigstens eine weitere Hardware-Netzwerkschnittstelle und keinen Kommunikations-Container für diese betrifft. Das erfindungsgemäße System, insbesondere dessen Autokonfigurationsmodul ist vorteilhafter Weiterbildung entsprechend ausgestaltet und/oder eingerichtet.

Die bzw. die jeweilige Netzwerk-Konfigurationsbeschreibung betrifft insbesondere wenigstens ein virtuelles Netzwerk, welches an die (jeweils) betroffene Netzwerkschnittstelle anzuschließen ist bzw. angeschlossen wird. Die bzw. die jeweilige Netzwerk-Konfigurationsbeschreibung betrifft mit anderen Worten ein "internes Netzwerk" bzw. eine "interne Verdrahtung" für die jeweilige Schnittstelle, über welche diese beispielsweise mit internen Netzwerken bzw. Containern, anderer Schnittstellen verbunden werden kann bzw. wird.

Die bzw. die jeweilige Netzwerk-Konfigurationsbeschreibung wird - völlig analog zu der bzw. den Container-Konfigurationsbeschreibungen - anschließend ausgeführt, um das das System gemäß dieser zu konfigurieren.

Die Netzwerk-Konfigurationsbeschreibung kann - ebenfalls in Analogie zu der Container-Konfigurationsbeschreibung - beispielsweise in Form einer Textdatei bzw. eines Textdokumentes gegeben sein, die insbesondere Anweisungen bzw. Kommandos umfasst, die von einer oder auch mehreren geeigneten Instanzen ausgeführt, insbesondere verarbeitet werden können. Sie kann in ihrer Struktur der Container-Konfigurationsbeschreibung, insbesondere deren zweiter Teilkonfigurationsbeschreibung - ähneln oder gleichen. Die vorstehend im Zusammenhang mit der Container-Konfigurationsbeschreibung erläuterten bevorzugten Merkmale können einzeln oder in Kombination auch bei der Netzwerk-Konfigurationsbeschreibung gegeben sein, mit dem insbesondere einzigen Unterschied, dass diese nicht der Erzeugung von Containern dient.

Hinsichtlich der bzw. der jeweiligen Netzwerk-Konfigurationsbeschreibung gilt u.a. bevorzugt, dass sie - ebenfalls völlig analog zu der bzw. den Container-Konfigurationsbeschreibungen - unter Verwendung einer Schablonen-Datei von dem Autokonfigurationsmodul erstellt wird. Alternativ oder zusätzlich gilt hinsichtlich der bzw. der jeweiligen Netzwerk-Konfigurationsbeschreibung, dass sie bevorzugt der Verarbeitung in einem Container-System bzw. Container-Werkzeug, wie etwa Docker Compose, dient. Sie ist insbesondere ausgestaltet, um von einem solchen ausgeführt zu werden.

Es sei angemerkt, dass es möglich ist, dass das Autokonfigurationsmodul für mehrere ggf. auch alle Netzwerkschnittstellen, für die keine Container-Konfigurationsbeschreibungen erstellt werden, Netzwerk-Konfigurationsbeschreibungen erstellt. Erforderlich ist dies jedoch nicht. Konfigurationsbeschreibungen für Schnittstellen können prinzipiell auch auf andere Weise erhalten werden.

Das Autokonfigurationsmodul kann zwar, muss jedoch nicht für alle Netzwerkschnittstellen eines Systems, die bei Inbetriebnahme erstmalig erfasst werden bzw. im Betrieb des Systems neu hinzukommen oder wegfallen, zum Einsatz kommen. Die erfindungsgemäße Vorgehensweise kann vielmehr auch in Kombination mit der konventionellen, vorbekannten Vorgehensweise, insbesondere in Kombination mit einer (teilweise) manuellen Konfiguration- etwa durch einen Anwender -, zum Einsatz kommen. So kann vorgesehen sein, dass für wenigstens eine weitere Schnittstelle alternativ oder zusätzlich dazu, dass das Autokonfigurationsmodul für diese zum Einsatz kommt, wenigstens eine Konfigurationsbeschreibung auf anderem Wege, etwa manuell erstellt wird bzw. worden ist.

Eine konventionelle, insbesondere (teilweise) manuelle Konfiguration kann natürlich auch für etwaig erforderliche andere, nicht durch das Autokonfigurationsmodul abgedeckte Aspekte vorgesehen sein, sowohl ergänzend für Schnittstellen, für welche das Autokonfigurationsmodul tätig wird bzw. bereits wurde, als auch für Schnittstellen, für welche dies nicht der Fall ist.

Insbesondere für den Fall, dass das Autokonfigurationsmodul nur für eine oder nur für einige Hardware-Netzwerkschnittstellen, die bei Inbetriebnahme erfasst werden bzw. später hinzukommen, zum Einsatz kommt, kann für wenigstens eine, bevorzugt sämtliche der verbleibenden Netzwerkschnittstellen jeweils eine (Netzwerk-)Konfigurationsbeschreibung, die wenigstens ein virtuelles Netzwerk, beispielsweise Macvlan, und/oder wenigstens eine virtuelle Bridge und/oder wenigstens einen virtuellen Switch für diese betrifft, erstellt werden bzw. worden sein.

In bevorzugter Ausgestaltung gilt, dass sämtliche erforderliche "interne Verdrahtung", die nicht durch das Autokonfigurationsmodul abgedeckt ist bzw. wird, auf konventionelle, vorbekannte Weise, insbesondere durch manuelle Konfiguration, erhalten wird.

Im Zusammenhang mit Macvlans sei beispielhaft auf https://docs.docker.com/network/macvlan/ verwiesen.

Das Autokonfigurationsmodul kann als Software implementiert sein. Die Software kann dann z.B. auf allgemeiner, ohnehin für andere Zwecke vorhandener Hardware des Systems laufen, so dass für die Umsetzung der vorliegenden Erfindung kein zusätzlicher beziehungsweise spezieller Hardware-Ausbau erforderlich ist. Selbstverständlich ist es aber auch möglich, dass für das Autokonfigurationsmodul - ggf. zusätzlich zu Software dieses - spezielle, zusätzliche Hardware vorgesehen ist. Das Autokonfigurationsmodul kann auch rein Hardware-implementiert sein.

Bei dem System kann es sich beispielsweise um einen Industrie-PC oder eine insbesondere speicherprogrammierbare Steuerung handeln. Das System kann Teil einer industriellen Automatisierungsanlage sein. Prinzipiell kann die erfindungsgemäße Autokonfiguration für jede Art von System aus dem industriellen Bereich, insbesondere der industriellen Automatisierung vorgesehen sein, welches in seiner Grundausstattung, bei Inbetriebnahme, eine oder mehrere (physikalische und/oder virtuelle) Hardware-Netzwerkschnittstellen aufweist und/oder dem im Betrieb eine oder mehrere Hardware-Netzwerkschnittstellen hinzugefügt und/oder von diesem entfernt werden.

Die erfindungsgemäße Vorgehensweise bietet mehrere große Vorteile. Einerseits müssen industrielle Anwender kein IT-Fachwissen für das Anwenden von containerisierten Netzwerkfunktionen, beispielsweise weder über Container, etwa Dock-Container, noch über zugehörige Werkzeuge, etwa Docker Network Driver, noch über Software-Switches haben, und können dennoch die Vorteile dieser Technologie für eine automatische Konfiguration im Falle einer Änderung bzw. Ergänzung des Hardware-Schnittstellenausbaus ihrer Systeme bzw. für deren Inbetriebnahme nutzen. Es wird daher besonders einfach für Anwender, Systeme aus dem Bereich der Automatisierungstechnik um Netzwerkzu- oder Abgänge zu erweitern bzw. solche zu entfernen. Eine manuelle Konfiguration mittels zusätzlichem Engineering- bzw. Konfigurations-Werkzeug(en) ist nicht mehr nötig. Es genügt das Anstecken der entsprechenden Netzwerk-Schnittellen-Hardware, an welches sich dann eine vollständig automatische Konfiguration anschließt.

In besonders bevorzugter Ausgestaltung ist vorgesehen, dass die Schablonen-Datei aus einer Mehrzahl von insbesondere auf dem System gespeicherten unterschiedlichen Schablonen-Dateien ausgewählt wird. Unter einer Mehrzahl sind dabei zwei, drei, vier oder auch mehr Schablonen-Dateien zu verstehen. Die Auswahl aus einer Mehrzahl von Schablonen-Dateien erfolgt bevorzugt automatisiert anhand von in den Schablonen-Dateien enthaltenen Filterregeln. Das erfindungsgemäße System, insbesondere das Autokonfigurationsmodul dieses ist bevorzugt entsprechend ausgebildet und/eingerichtet.

Sind mehrere Schablonen-Dateien verfügbar, aus denen ausgewählt werden kann, kann besonders einfach auf eine erstmalige Erfassung und/oder das neue Hinzufügen von Schnittstellen unterschiedlicher Art reagiert werden.

Wird auf Filterregeln zurückgegriffen, können diese beispielsweise einen der oder der der jeweils betroffenen Schnittstelle zugeordneten Namen und/oder die Art der oder der jeweils betroffenen Schnittstelle betreffen. Schnittstellen ist bzw. wird in der Regel ein eindeutiger Name zugeordnet, insbesondere von dem bzw. über das Betriebssystem, und über den Namen ist es auf einfache Weise möglich, zwischen verschiedenen Arten von Schnittstellen zu unterscheiden. Beispielsweise kann vorgesehen sein, dass jeweils die ersten Zeichen, zum Beispiel Buchstaben, von Netzwerkschnittstellen der gleichen Art bzw. mit gleicher Rolle übereinstimmen und die konkrete Individualisierung über nachfolgende Zeichen, etwa Buchstaben, erfolgt.

Weiterhin bevorzugt ist vorgesehen, dass für mehrere, bevorzugt für jede Art von physikalischer und/oder virtueller Hardware-Netzwerkschnittstelle, welche das System aufweisen kann, jeweils wenigstens eine, bevorzugt jeweils genau eine Schablonen-Datei insbesondere auf dem System gespeichert ist, und/oder dass für zumindest drei verschiedene Arten von physikalischen und/oder virtuellen Hardware-Netzwerkschnittstellen jeweils wenigstens eine, bevorzugt jeweils genau eine Schablonen-Datei insbesondere auf dem System gespeichert ist, wobei es sich bei den drei verschiedenen Arten von physikalischen und/oder virtuellen Hardware-Netzwerkschnittstellen besonders bevorzugt um Upstream-Schnittstellen, die insbesondere mit einem Up-stream-, etwa Firmen-Netzwerk eines Anwenders zu verbinden oder verbunden sind, und Downstream- Schnittstellen, die mit einem unterlagerten Netzwerk, insbesondere Zellen- oder Produktionsnetz, zu verbinden oder verbunden sind, und WLAN-Schnittstellen, die mit einem Drahtlos-Netzwerk zu verbinden oder verbunden sind, handelt.

Im industriellen Umfeld sind oftmals folgende drei Arten von Schnittstellen möglich:
- Upstream/Infrastruktur Netzwerkschnittstellen
   Bei diesen handelt es sich insbesondere um kabelgebundene Schnittstellen (sogenannte "wired-interfaces"), die in der Regel unterlagerte Netzsegmente, etwa Feldbus-Netzsegmente, beispielsweise an eine IT-Infrastruktur, etwa ein Firmennetzwerk, anbinden.
- Wireless Netzwerkschnittstellen:
   Diese Schnittstellen stellen in der Regel automatisiert lokale WLAN-Zugänge insbesondere ausschließlich zu den unterlagerten Feldbus-Netzsegmenten bereit. Damit wird es beispielsweise möglich, mobile Android- und/oder iOS-Geräte auch in drahtgebundenen Automatisierungsnetzen verwenden zu können.
- Downstream Netzwerkschnittstellen:
   Diese Schnittstellen führen in der Regel in unterlagerte Feldbus-Netzsegmente, die beispielsweise der Kommunikation zwischen Feldgeräten und einer Steuerung bzw. einem Industrie-PC einer Automatisierungsanlage dienen, an denen entsprechend einzelne Maschinen, Aggregate und Automatisierungsgeräte, insbesondere einer industriellen Automatisierungsanlage, angeschlossen sind. In diese "downstream" Netzsegmente werden bevorzugter Weise Netzwerkfunktionen von Nat64-Routern und/oder IPV6-Routern und insbesondere Inbetriebsetzungs-Werkzeuge wie das sogenannte Primary Setup Tool (PST), etwa für IP-basierte Feldgeräte, automatisch bereitgestellt, sobald eine Netzwerkschnittstelle dieser Art erkannt wird und in Betrieb geht.

Sind für diese drei Arten von Schnittstellen bzw. diese drei Rollen von Schnittstellen Schablonen-Dateien zum Erhalt einer zugehörigen Container-Konfigurationsbeschreibung verfügbar, können die meisten Fälle von Schnittstellen-Änderungen bzw. - Erfassungen im industriellen Bereich abgedeckt werden.

Was die Ausführung bzw. Umsetzung der Konfigurationsbeschreibung und den Erhalt einer entsprechenden Konfiguration des Systems angeht, kann vorgesehen sein, dass im Rahmen der Ausführung bzw. Umsetzung der ersten Teilkonfigurationsbeschreibung der wenigstens eine Kommunikations-Container erzeugt wird. Das erfindungsgemäße System ist bevorzugt entsprechend ausgebildet und/oder eingerichtet. Die Ausführung bzw. Umsetzung der ersten Teilkonfigurationsbeschreibung erfolgt mittels eines Container-Controller-Moduls des Systems.

Das Container-Controller-Modul ist besonders bevorzugt als Software implementiert, kann aber, genau wie das Autokonfigurationsmodul prinzipiell auch spezielle, zusätzliche Hardware umfassen bzw. auch rein hardware-implementiert sein.

Die Ausgestaltung eines Container-Controller-Moduls wird in der Regel davon abhängen, welche Container-Technologie bzw. welche Container-Technologien zum Einsatz kommen. Das Container-Controller-Modul kann beispielsweise ein Docker Composer Werkzeug und/oder einen Kubernetes Pod Scheduler Controller umfassen oder dadurch gegeben sein. Zu Kubernetes siehe beispielsweise https://kubernetes.io/docs/reference/commandline-tools-reference/kube-scheduler/. Wird alternativ oder zusätzlich zu Docker und/oder Kubernetes auf andere bzw. weitere Container-Technologie(n) zurückgegriffen, kann das Container-Controller-Modul zweckmäßigerweise zu dieser bzw. diesen Technologien gehörige Werkzeuge, mittels derer Container aus einer zugehörigen Container-Konfigurationsbeschreibung erzeugt werden können, umfassen bzw. dadurch gegeben sein.

Das erfindungsgemäßen Verfahren zeichnet sich dadurch aus, dass die zweite Teilkonfigurationsbeschreibung von einem Netzwerk-Controller-Modul des Systems umgesetzt wird. Das erfindungsgemäße System ist entsprechend ausgebildet und/oder eingerichtet. Die zweite Teilkonfigurationsbeschreibung kann beispielsweise in Form eines Shell-Skriptes vorliegen, und/oder als sogenannte "systemd units", und/oder als Clustersystem-Objekte (insbesondere Kubernetes API-objects) und/oder dergleichen mehr ausgeführt sein. Zu "systemd units" siehe beispielsweise https://en.wikipedia.org/wiki/Systemd und zu Kubernetes https://en.wikipedia.org/wiki/Kubernetes. Das Netzwerk-Controller-Modul, welches bevorzugt als Software implementiert ist, kann dann entsprechend einen Shell-Skript-Interpreter und/oder systemd und/oder einen Kubernetes-Controller umfassen oder dadurch gebildet werden.

Ein Kommunikations-Container ist bevorzugt ein Container, dessen Software-Inhalt Netzwerk-, insbesondere Netzwerk-Kommunikationsfunktionen bereitstellt, besonders bevorzugt auf den ISO/OSI-Schichten 2 und/oder 3 und/oder 4 und/oder 7. Rein Beispielhaft sei für einen Kommunikations-Container das Umsetzen von IP-Verkehr zwischen den Protokollversionen 4 und 6 genannt. Die im Container enthaltene Software realisiert bevorzugt eine eigene Control Plane (in diesem Zusammenhang sei rein beispielhaft auf die EP 3 062 490 A1 der Siemens AG verwiesen) und eine Data Plane (in diesem Zusammenhang sei rein beispielhaft auf WrapSix NAT64 data plane in user space, http://wrapsix.org; Tayga NAT64 in user space, http://www.litech.org/tayga/ verwiesen). Alternativ dazu ist es auch möglich, dass eine Kommunikations-Container nur eine eigene Control Plane implementiert, während als Data Plane die Data Plane des Betriebssystem-Kerns benutzt wird, wie zum Beispiel im Fall eines autokonfigurierenden IPv6-Routers, wie in der früheren europäischen Patentanmeldung 18192748.4 der Siemens AG offenbart.

Besonders bevorzugt ist weiterhin vorgesehen, dass wenigstens eine Anwendung des wenigstens einen Kommunikations-Containers gemäß der ersten Teilkonfigurationsbeschreibung Funktionen eines insbesondere automatisch konfigurierenden IPv6- und/oder NAT64-Routers und/oder eines Namensdienst-, insbesondere DNS-Servers und/oder eines Brouters bereitstellt und/oder durch eine Software für einen WLAN-Access-Point gegeben ist oder eine solche umfasst.

Bei Netzwerkfunktionen des wenigstens einen Kommunikations-Containers, also Netzwerkfunktionen gemäß der ersten Teilkonfigurationsbeschreibung, handelt es sich insbesondere um solche, die Konnektivität der betroffenen Hardware-Netzwerk-schnittstelle mit wenigstens einer weiteren Hardware-Netzwerkschnittstelle bzw. einem externen Netzwerk gewährleisten bzw. herstellen, ggf. mit Netztrennung.

Bei Netzwerkfunktionen des wenigstens einen Kommunikations-Containers kann es sich beispielsweise um folgende handeln:
- autokonfigurierende IPv6-Router bevorzugt samt autokonfigurierendem und/oder "autoiterativem" DNS-Server, wie in den ebenfalls auf die Anmelderin zurückgehenden europäischen Patenanmeldungen des Aktenzeichens Nr. 18187459.5 und 18187456.1 sowie 17194062.0 beschrieben.
- autokonfigurierende NAT64-Router insbesondere inklusive Profinet-Systeme-Scanner wie in den ebenfalls auf die Anmelderin zurückgehenden EP 3 062 490 B1 beschrieben.

Welche Netzwerkfunktionen konkret über den einen oder die mehreren Kommunikations-Container bereitgestellt werden bzw. bereitzustellen sind, wird dabei von der Art der betroffenen Schnittstelle abhängen. Wie vorstehende bereits angemerkt, sind für Downstream-Netzwerkschnittstellen in der Regel insbesondere IPv6- und/oder NAT64-Funktionen gewünscht bzw. erforderlich. Wird eine Wireless-Network-Schnittstelle hinzugefügt, kann erforderliche bzw. zugehörige Software containerisiert bereitgestellt werden.

Zusätzlich zu insbesondere IP-Konnektivität bereitstellenden bzw. gewährleistenden Netzwerkfunktionen können weitere Funktionen bzw. Dienste über einen oder mehrere Container bereitgestellt werden, etwa Inbetriebsetzungs-Werkzeuge, wie das sogenannte Primary Setup Tool (PST). Über solche können z.B. (IP-basierte) Teilnehmer eines an die betroffene Netzwerk-schnittstelle angeschlossenen (Teil-)Netzwerkes, beispielsweise an ein Feldbussegment angeschlossene (IP-basierte) Feldgeräte, automatisch In Betrieb gesetzt werden. Die erste Teilkonfigurationsbeschreibung kann entsprechend auch Angaben zu wenigstens einem Container enthalten, der wenigstens eine Anwendung umfasst, mittels derer neben Netzwerkfunktionen andere bzw. weitere Funktionen bzw. Dienste bereitgestellt werden können, insbesondere Inbetriebsetzungsfunktionen bzw. - dienste.

Besonders bevorzugt kann weiterhin vorgesehen sein, dass für den Fall, dass eine physikalische oder virtuelle Hardware-Netzwerkschnittstelle im Betrieb des Systems wegfällt, weil sie beispielsweise von einem Anwender entfernt und/oder deaktiviert wird, zugehörige Netzwerk-Funktionen deaktiviert und/oder entfernt und/oder Kommunikations-Container gestoppt werden. Dies wird bevorzugt von dem Autokonfigurationsmodul veranlasst. Zugehörige Netzwerkfunktionen sind insbesondere solche, die für die betroffene Hardware-Netzwerkschnittstelle eingerichtet waren und über die besonders bevorzugt Konnektivität der betroffenen Hardware-Netzwerkschnittstelle mit wenigstens einer weiteren Hardware-Netzwerkschnittstelle bzw. einem externen Netzwerk gewährleistet wurde, ggf. mit Netztrennung. Das erfindungsgemäße System ist bevorzugt entsprechend ausgebildet und/oder eingerichtet.

Bei den Netzwerkfunktionen und/oder Kommunikations-Containern, die deaktiviert und/oder entfernt bzw. gestoppt werden, handelt es sich besonders bevorzugt um die diejenigen Netzwerkfunktionen bzw. Kommunikations-Container, die im Falle der erstmaligen Erfassung einer Hardware-Netzwerkschnittstelle und/oder der Ergänzung einer solchen erfindungsgemäß unter Nutzung einer Schablonen-Datei hinzukommen.

Hierfür kann die zu verwendende Schablonen-Datei, die von der Art der weggefallenen Netzwerk-Schnittstelle abhängt, beispielsweise Lösch- und/oder Stoppanweisungen enthalten, insbesondere Löschanweisungen bzgl. Netzwerkfunktonen zur Verbindung wenigstens eines Kommunikations-Containers mit der betroffenen, weggefallenen Hardware-Netzwerkschnittstelle, beispielsweise in Form wenigstens einer virtuellen Bridge, und/oder wenigstens eines virtuellen Switches für diese Verbindung. Das erfindungsgemäße System ist bevorzugt entsprechend ausgebildet und/oder eingerichtet.

Bei der Schablonen-Datei, die im Falle des Wegfallens einer Hardware-Netzwerkschnittstelle verwendet wird, handelt es sich besonders bevorzugt um die gleiche Schablonen-Datei, die im Falle einer erstmaligen Erfassung und/oder der Ergänzung einer Hardware-Schnittstelle gleicher Art bzw. mit gleicher Rolle zur Verwendung kommt. Dann sind bevorzugt zusätzlich Lösch- und/oder Stoppanweisungen in dieser enthalten. Es sei angemerkt, dass insbesondere Kommunikations-Container betreffende Stoppanweisungen, die etwa von einem Container-Werkzeug zu interpretieren sind, auch separat von der Schablonen-Datei übermittelt werden können, etwa auf direktem oder indirektem Wege von dem Autokonfigurationsmodul an ein Container-Control-Modul.

Wird für die erstmalige Erfassung bzw. für das Hinzukommen von Schnittstellen die gleiche Schablonen-Datei verwendet, wie im Falle des Wegfallens von Schnittstellen der gleichen Art, ist bevorzugt für jede Schnittstellen-Art bzw. Schnittstellen-Rolle genau eine Schablonen-Datei vorgesehen, insbesondere auf dem System gespeichert, was eine besonders "schlanke" Lösung für eine Autokonfiguration und ein automatisches Löschen darstellt.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

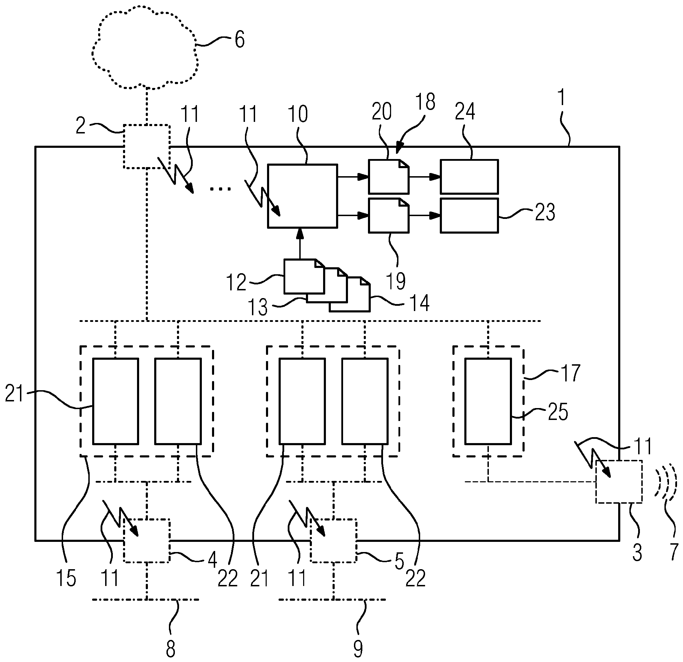

Weitere Merkmale und Vorteile der vorliegenden Erfindung werden anhand der nachfolgenden Beschreibung einer Ausführungsform des Verfahrens sowie des Systems der vorliegenden Erfindung unter Bezugnahme auf die beiliegende Zeichnung deutlich.

Die einzige Figur zeigt eine rein schematische Darstellung eines erfindungsgemäßen Systems.

Dargestellt ist ein Ausführungsbeispiel eines erfindungsgemäßen Automatisierungssystems 1 einer in den Figuren nicht weiter dargestellten industriellen Automatisierungsanlage in rein schematischer Darstellung.

Bei dem Automatisierungssystem 1 handelt es sich vorliegend um eine speicherprogrammierbare Steuerung (SPS). Es sei betont, dass es sich alternativ dazu auch um eine andere Art von System handeln kann. Die erfindungsgemäße Autokonfiguration kann prinzipiell für jede Art von System aus dem industriellen Bereich, insbesondere der industriellen Automatisierung vorgesehen sein, welches in seiner Grundausstattung, bei Inbetriebnahme, eine oder mehrere Hardware-Netzwerkschnittstellen aufweist und/oder dem im Betrieb eine oder mehrere Hardware-Netzwerkschnittstellen hinzugefügt und/oder von diesem entfernt werden (können).

Das System 1 weist vorliegend vier Hardware-Netzwerkschnittstellen 2, 3, 4, 5 auf. Alle vier Schnittstellen sind bei dem hier dargestellten Ausführungsbeispiel physikalische Hardware-Netzwerkschnittstellen 2, 3, 4, 5. Alternativ dazu kann es sich bei einer, bei mehreren oder auch allen diesen Schnittstellen um virtuelle Hardware-Netzwerkschnittstellen, beispielsweise einer oder mehrerer virtuellen Maschinen (VMs) handeln.

Für jede der vier Schnittstellen 2, 3, 4, 5 umfasst ein Betriebssystem des Automatisierungssystems 1, welches in der Figur nicht dargestellt ist, jeweils wenigstens einen Treiber.

Die Schnittstellen 2, 3, 4, 5 sind an verschiedene Netzwerke 6, 7, 8, 9 angeschlossen.

Konkret ist die Schnittstelle 2, bei welcher es sich um eine Upstream/Infrastruktur Netzwerkschnittstelle handelt, an ein Firmen- oder Fabriknetzwerk 6 angeschlossen, welches in der Figur rein schematisch durch eine Wolke angedeutet ist. Die Schnittstelle 3 ist an ein (lokales) Drahtlos-Netzwerk 7 angeschlossen und stellt somit eine Drahtlos-Netzwerk-Schnittstelle dar, und die beiden Schnittstellen 4, 5 sind jeweils an ein unterlagertes Maschinen- oder Zellennetzwerk 8, 9 angeschlossen. Die Schnittstellen 4, 5 binden vorliegend unterlagerte Feldbus-Netzsegmente an das Firmennetzwerk 6 an. Sie stellen Downstream-Netzwerk-Schnittstellen dar.

Zur besseren Unterscheidung sind in der Figur die drei verschiedenen Netzwerk-Arten und zugehörigen Elemente mit verschiedenen Linien-Arten dargestellt, konkret das Firmennetzwerk 6 und zugehörige Elemente mit punktierten Linien, das Drahtlos-Netzwerk 7 und zugehörige Elemente mit gestrichelten Linien und die unterlagerten Maschinen- oder Zellennetzwerke 8 und zugehörigen Elemente mit strichpunktierten Linien.

Von Seiten der Anwender ist es erstrebenswert bzw. gewünscht, dass möglichst rasch eine durchgehende Konnektivität zwischen dem Firmen- und Produktionsnetz 6, den unterlagerten Zellen- bzw. Maschinennetzen 8, 9 und dem Drahtlos-Netzwerk 7 hergestellt wird, und zwar entsprechend des anwenderseitig vorgenommenen und/oder geänderten Hardware-Ausbaus an Schnittstellen 2, 3, 4, 5.

Um dies zu gewährleisten, ist das System 1 ausgebildet und eingerichtet, um sowohl bei Inbetriebnahme als auch im laufenden Betrieb zu überwachen, welche physikalischen und/oder virtuellen Hardware-Netzwerkschnittstellen 2, 3, 4, 5 vorhanden sind. Die Überwachung erfolgt vorliegend über ein auf dem System 1 installiertes Betriebssystem.

Das System 1 umfasst weiterhin ein Autokonfigurationsmodul 10.

Für den Fall, dass eine physikalische oder virtuelle Hardware-Netzwerkschnittstelle 2, 3, 4, 5 bei Inbetriebnahme des Systems 1 erstmals erfasst wird, oder eine physikalische oder virtuelle Hardware-Netzwerkschnittstelle 2, 3, 4, 5 im laufenden Betrieb des Systems 1 neu hinzukommt oder wegfällt, wird dies dem Autokonfigurationsmodul 10 kommuniziert und zwar zusammen mit einer Information über die Art der betroffenen Hardware-Netzwerkschnittstelle 2, 3, 4,5 und/oder die Art eines mit dieser verbundenen oder zu verbindenden Netzwerkes 6, 7, 8, 9. Die Kommunikation erfolgt vorliegend, indem das Betriebssystem dem Autokonfigurationsmodul 10 ein entsprechendes Ereignis als Plug-and-Play-Ereignis meldet. Die Meldung umfasst die Information, um welche Art von Ereignis es sich handelt, also ob eine Schnittstelle erstmals erfasst wurde oder neu hinzugekommen oder weggefallen ist. Weiterhin wird dem Autokonfigurationsmodul 10 ein Name der jeweils betroffenen Schnittstelle 2, 3, 4, 5 mitgeteilt. Die Schnittstellennamen sind derart gewählt, dass von diesen ableitbar ist, um welche Art von Schnittstelle 2, 3, 4, 5 es sich handelt, bzw. welche Rolle dieser zukommt. Bei Bedarf können neben dem Schnittstellennamen auch weitere Informationen hinzugefügt werden, beispielsweise der Busanschluss (insbesondere Hardware-Anschluss am PCI-Bus, USB-Bus und dergleichen), MAC-Adressen und dergleichen mehr.

In der Figur ist ein solches Hardware- bzw. Schnittstellen-Ereignis, also das erstmalige Erfassen oder neue Hinzukommen oder Wegfallen einer Schnittstelle 2, 3, 4, 5, jeweils rein schematisch mit einem Blitz angedeutet, welcher mit der Bezugsziffer 11 versehen ist.

Bevorzugt jedes Mal, wenn eine Meldung über ein solches Hardware-Ereignis 11 bei dem Autokonfigurationsmodul 10 eingeht, wählt dieses in Reaktion darauf aus einer Mehrzahl von auf dem System gespeicherten Schablonen-Dateien 12, 13, 14 eine Schablonen-Datei 12, 13, 14 für den jeweiligen Kontext 15, 16, 17 aus.

Vorliegend sind drei Schablonen-Dateien 12, 13, 14 im System gespeichert. Eine für jede Schnittstellen-Art bzw. -Rolle, also eine Schablonen-Datei 12 für ein Hardware-Ereignis 11, welches eine Downstream-Schnittstelle 4, 5, betrifft, eine Schablonen-Datei 13 für ein Hardware-Ereignis 11, welches eine Drahtlos-Netzwerk-Schnittstelle 3 betrifft, und eine Schablonen-Datei 14 für ein Hardware-Ereignis 11, welches eine Upstream-Schnittstelle 2, betrifft. Es versteht sich, dass weitere Schablonen-Dateien für weitere Schnittstellen-Arten bzw. Schnittstellen-Rollen hinterlegt sein können. Bevorzugt ist für jede Art bzw. jede Rolle von Schnittstelle 2, 3, 4, 5, die an einem gegebenen System 1 auftreten kann, wenigstens eine, insbesondere genau eine Schablonen-Datei 12, 13, 14 auf dem System 1 hinterlegt, so dass jeder mögliche Hardware-Ausbau bzw. jede mögliche Änderung dieses abgedeckt ist.

Die Auswahl einer Schablonen-Datei 12 aus der Mehrzahl von Schablonen-Dateien 12, 13, 14 für den jeweiligen Kontext 15, 16, 17 durch das Autokonfigurationsmodul 10 erfolgt anhand von in den Schablonen-Dateien 12, 13, 14 hinterlegten Filterregeln. Vorliegend betreffen die Filterregeln Namen, die den Schnittstellen 2, 3, 4, 5 zugeordnet sind, und die dem Autokonfigurationsmodul 10 bei einem Hardware-Ereignis 11 kommuniziert werden bzw. wurden.

Im Folgenden wird der Ablauf beispielhaft für die Upstream-Schnittstelle 2 und die Downstream-Schnittstelle 4, die von einem Anwender neu hinzugefügt wird, beschrieben. Sind noch andere Schnittstellen 3, 5 betroffen oder fallen diese weg oder werden bei Inbetriebnahme erstmalig erfasst, kann der Ablauf analog sein.

In Reaktion auf das Erfassen der Schnittstelle 2 wählt das Autokonfigurationsmodul 10 die zugehörige Schablonen-Datei 14 aus, also diejenige Schablonen-Datei 14, die für ein solches Hardware-Ereignis 11, konkret für Upstream-Schnittstellen vorgesehen ist.

Die Auswahl der Schablonen-Datei 14 für die Schnittstelle 2 erfolgt dabei anhand des Namens der Schnittstelle 2, der vorliegend "eth0" lautet, wobei betont sei, dass dies rein beispielhaft zu verstehen ist. Im vorliegenden Falle wird bzw. wurde der Upstream-Schnittstelle 2 gezielt dieser Name gegeben.

Die ausgewählte Schablonendatei 14 für die Upstream-Schnittstelle 2 lautet:

```
 match:
  device: "eth0"
 networks:
  - {{device.name}}:
    script:
      add:
      - docker network create -d bridge
         1uplink
      - DSBR='docker network inspect -format
           '{{.Id|printf "br-%.12s"}}'
           1uplink'
      - ip link set {{device.name}} master $DSBR
      remove:
      - Docker network rm 1uplink
```

wobei dies rein beispielhaft zu verstehen ist und eine Schablonendatei 14 für eine Upstream-Schnittstelle 2 auch anders lauten kann.

Hinsichtlich der drei Absätze unter "add:" in der beispielhaft genannten Schablonendatei 14, denen jeweils ein Spiegelstrich voransteht, gilt folgendes: Über den ersten Absatz wird ein internes Netzwerk für die Schnittstelle 2 angelegt, über den zweiten Absatz der tatsächliche Gerätename der virtuellen Bridge ermittelt, die zuvor als Teil des Netzwerkes angelegt wurde (bei dem genannten Beispiel ein Linux-Gerätename, was nicht einschränkend zu verstehen ist), und über den dritten Absatz wird die Netzwerkschnittstelle 2 an die virtuelle Bridge angeschlossen.

Über den Absatz unter "remove:" kann das interne Netzwerk zur Schnittstelle 2 wieder entfernt werden. Dieser Befehl würde greifen bzw. greift, wenn die Schnittstelle 2 wieder wegfallen sollte bzw. wegfällt.

Wie man erkennt, werden der Upstream-Schnittstelle 2 im Rahmend des hier beschriebenen Ausführungsbeispiels keine Kommunikations-Container zugeordnet. Für diese Rolle ("Upstream") sind vorliegend keine Container erforderlich, wobei dies rein beispielhaft zu verstehen ist. Selbstverständlich ist es prinzipiell möglich, dass alternativ dazu auch wenigstens einer Upstream-Schnittstelle 2 wenigstens ein Container zugeordnet wird.

Als weiteres Beispiel für eine Schablonen-Datei 14 sei genannt:

```
 match:
  device: "eth0"
 networks:
  - {{device.name}}:
    script:
      add:
      - docker network create -d macvlan
        -o parent={{device.name}}
         1uplink
      remove:
      - Docker network rm 1uplink
```

Wie man erkennt, ist das zweite Beispiel eines für Macvlan. Über die Zeile "-o parent={{device.name}}" kann dabei der für die Ausführung bzw. Verarbeitung zum Einsatz kommenden Instanz, insbesondere Docker, mitgeteilt werden, dass später Container in diesem Netzwerk mit der Netwerkschnittstelle eth0 mittels Macvlan zu koppeln sind.

Aus der Schablonen-Datei 14 (gemäß dem ersten oder zweiten Beispiel) wird von dem Autokonfigurationsmodul 10 eine Netzwerk-Konfigurationsbeschreibung 18 für die Schnittstelle 2 erstellt, nämlich:

```
 #!/bin/bash
 docker network create -d bridge \
 1uplink
 DSBR='docker network inspect -format \
 '{{.Id|printf "br-%.12s"}}' \
 1uplink'
 ip link set eth0 master $DSBR
```

Unter Verwendung des zweitgenannten Beispiels einer Schablonen-Datei 14 folgende Netzwerk-Konfigurationsbeschreibung 18 erstellt:

```
 #!/bin/bash
 docker network create -d macvlan -o parent=eth0 \
 1uplink
```

Damit kann der für die Ausführung bzw. Verarbeitung zum Einsatz kommenden Instanz, insbesondere Docker, das Netzwerk vom Typ Macvlan angekündigt werden. Es warden insbesondere noch keine virtuellen Netzwerkkomponenten, etwa im Linux-Kernel, angelegt. Es wird lediglich vermerkt, das smit eth0 per Macvlan zu verbinden sein wird.

Die Erstellung der Netzwerk-Konfigurationsbeschreibung 18 aus der Schablonen-Datei 14 erfolgt, indem das Autokonfigurationsmodul 10 den mehrfach in der Schablonen-Datei 14 auftauchenden Platzhalter {{device.name}} durch konkrete Werte, vorliegend den konkreten Schnittstellen-Namen ens33p0 ersetzt.

Es sei angemerkt, dass in der Figur neben der Netzwerk-Konfigurationsbeschreibung 18 zwei Teilkonfigurationsbeschreibungen 19, 20 gezeigt sind. Diese beiden sind für den Fall vorhanden, dass die erstellte Konfigurationsbeschreibung einen oder mehrere Kommunikations-Container 21, 22 betrifft (Container-Konfigurationsbeschreibung 18), wie es für die Schnittstelle 4 der Fall ist und weiter unten noch im Einzelnen beschrieben wird. Was die Schnittstelle 2 angeht, kann man vereinfacht davon ausgehen, dass die Netzwerk-Konfigurationsbeschreibung 18 nur durch den oberen Teil 20 gebildet wird.

Die Netzwerk-Konfigurationsbeschreibung 18 (bzw. 20) wird umgesetzt bzw. ausgeführt, um das System 1 gemäß dieser zu konfigurieren.

Das System 1 weist ein Container-Controller-Modul 23 und ein Netzwerk-Controller-Modul 24 auf, die vorliegend beide Software-implementiert sind.

Das Netzwerk-Controller-Modul 24 dient bei dem hier beschriebenen Beispiel der Umsetzung bzw. Ausführung der Netzwerk-Konfigurationsbeschreibung 18 (bzw. 20) für die Schnittstelle 2. Es ist vorliegend, da die Netzwerk-Konfigurationsbeschreibung 18 für die Schnittstelle 2 in Form eines Shell-Scripts bereitgestellt wird, konkret als Shell-Script-Interpreter ausgeführt bzw. umfasst einen solchen. Es versteht sich, dass das Netzwerk-Controller-Modul 24, wenn die Netzwerk-Konfigurationsbeschreibung 18 in anderer Form erzeugt wird, auch anders ausgeführt sein kann, beispielsweise als systemd oder Kubernetes Controller bzw. solche umfassen kann.

Durch die Ausführung der Netzwerk-Konfigurationsbeschreibung 18 durch das Netzwerk-Controller-Modul 24 wird eine virtuelle Bridge angelegt und die Schnittstelle 2 mit dieser virtuellen Bridge verbunden. Mit dieser virtuellen Bridge können später beispielsweise Kommunikations-Container 21, 22, die anderen Schnittstellen 4 zugeordnet sind bzw. werden, verbunden werden.

Hinsichtlich der im laufenden Betrieb hinzukommenden Downstream-Schnittstelle 4 gilt im Rahmen des hier beschriebenen Ausführungsbeispiels das Folgende:
In Reaktion auf das neue Hinzufügen der Schnittstelle 4, insbesondere durch einen Anwender, wählt das Autokonfigurationsmodul die Schablonen-Datei 12 aus, also diejenige Schablonen-Datei 12, die für ein solches Hardware-Ereignis 11, konkret für Downstream-Schnittstellen vorgesehen ist.

Die Auswahl erfolgt dabei anhand des Namens der hinzugefügten Schnittstelle, der vorliegend "ens33p2" lautet, bzw. anhand eines insbesondere ersten Teils des Namens "ens*", wobei betont sei, dass dies rein beispielhaft zu verstehen ist. Im vorliegenden Falle wird Downstream-Schnittstellen, welche der Anbindung von Feldbus-Netzwerksegmenten dienen, gezielt ein Name gegeben, der mit den drei Buchstaben "ens" beginnt.

Die ausgewählte Schablonen-Datei 12 für die Schnittstelle 4 sieht vorliegend wie folgt aus, wobei betont sei, dass dies eine rein beispielhafte Fassung ist, und Schablonen-Dateien für Downstream-Schnittstellen 4, 5 auch eine andere Form aufweisen können:

```
 match:
  device: "ens*"
 networks:
  - {{device.name}}:
    script:
      add:
      - ip link add br{{device.name}} type bridge
      - ip link set br{{device.name}} up
      - ip link set {{device.name}} master br{{device.name}}
      - ip link {{device.name}} up
      remove:
      - ip link del br{{device.name}}
 containers:
  v6router:
    image: ...
    networks:
    - uplink
    - {{device.name}}
  anat64:
    image: ...
    networks:
    - {{device.name}}
 "match:" bzw. die ersten beiden Zeilen dieser Datei stellen
 dabei die den Schnittstellen-Namen betreffende Filterregel
 dar. Beginnt ein Name einer erstmals erfassten, neu hinzuge-
 fügten oder wegfallenden Schnittstelle 2, 3, 4, 5 mit "ens*",
 wird diese Schablonen-Datei 12 ausgewählt.
```

Als zweites Beispiel für eine Schablonen-Datei 12 für eine Downstream-Schnittstelle 4 sei genannt:

```
 match:
  device: "ens*"
 networks:
  - {{device.name}}:
    script:
      add:
      - docker network create -d bridge
        2{{device.name}}_downstream
      - DSBR='docker network inspect -format
           '{{.Id|printf "br-%.12s"}}'
           2{{device.name}}_downstream'
      - ip link set {{device.name}} master $DSBR
      remove:
      - Docker network rm 2{{device.name}}_downstream
 containers:
  v6router:
    image: ...
    networks:
    - 1uplink
    - 2{{device.name}}_downstream
  anat64:
    image: ...
    networks:
    - 2{{device.name}}_downstream
```

Dieses Beispiel ist insbesondere vorteilhaft, wenn ein der Netzwerk-Schnittstelle 2 zugeordnetes internes Netzwerk bereits auf anderem Wege angelegt wurde. Die Schablone 12 beschreibt nun, wie das noch fehlende Bridge-Network für die neue Schnittstelle 4 anzulegen ist: diese ist ein Shell-Skript, welches das Netzwerk per Docker-Kommando anlegt und die neue Schnittstelle 4 unter die Kontrolle der Bridge stellt. Mit dem ersten Beispiel übereinstimmend handelt es sich um ein Skript und es wird ein Bridge-Netzwerk angelegt.

Hinsichtlich der in dem Abschnitt "add" aufgeführten drei Absätze bzw. Kommandos (jeweils hinter einem Spigelstrich stehend) gilt, dass der erste ein internes Netzwerk mit einer virtuellen Bridge unter dem Namen "2ens33p2_downstream" anlegt, wobei der Anteil "ens33p2" der Name der Netzwerk-schnittstelle 4 ist, der zweite den tatsächlichen Gerätenamen (in dem genannten Beispiel Linux-Gerätenamen) der virtuellen Bridge ermittelt, die zuvor als Teil des Netzwerks angelegt wurde, und der dritte die Netzwerkschnittstelle 4 an die virtuelle Bridge anschließt, die zuvor als Teil des Netzwerkes angelegt wurde.

Der darauf folgend, konkret nach "remove:" folgende Absatz entfernt das Netzwerk samt virtueller Bridge zwischen dem Container 21 und der Schnittstelle 4. Diese Arbsatz greift für den Fall, dass die Schnittstelle 4 wieder wegfällt.

Hinsichtlich der beiden Absätze nach "networks:" gilt, dass "1uplink" den Bezug zum bereits früher angelegten internen Netzwerk an der Schnittstelle 2 herstellt, und "2{{device.name}}_downstream" den Bezug zu dem vorangegangen für die Schnittstelle 4 angelegten internen Netzwerk.

Über "- 2{{device.name}}_downstream" in der letzten Zeile der Schablone 12 wird der Container an das interne Netzwerk zur Schnittstelle 4 angeschlossen. Eine direkte Verbindung mit dem internen Netzwerk der Schnittstelle 2 ist beispielhaft nicht erforderlich, stattdessen wird diese Verbindung indirekt über den v6router-Container hergestellt.

Als drittes Beispiel für eine Schablonen-Datei 12 für eine Downstream-Schnittstelle 4 sei ferner genannt:

```
 match:
  device: "ens*"
 networks:
  - {{device.name}}:
    script:
      add:
      - docker network create -d macvlan
        -o parent={{device.name}}
        2{{device.name}}_downstream
      remove:
      - Docker network rm 2{{device.name}}_downstream
 containers:
  v6router:
    image: ...
    networks:
    - 1uplink
    - 2{{device.name}}_downstream
  anat64:
    image: ...
    networks:
    - 2{{device.name}}_downstream
```

Wie man erkennt, ist dieses Bespiel wiederum eines für Macvlan.

Das Autokonfigurationsmodul 10 erstellt unter Verwendung der Schablonen-Datei 12 (gemäß dem erstgenannten bzw. dem zweitgenannten bzw. dem drittgenannten Beispiel) eine Container-Konfigurationsbeschreibung 18, die eine erste Teilkonfigurationsbeschreibung 19 und eine zweite Teilkonfigurationsbeschreibung 20 umfasst.

Es sei angemerkt, dass in der vereinfachten Figur aus Gründen der besseren Übersichtlichkeit der Ablauf der Erstellung einer Konfigurationsbeschreibung 18 nur ein Mal für beide Schnittstellen 2 und 4 schematisch dargestellt ist. Das Element mit dem Bezugszeichen 18 repräsentiert daher sowohl die für die Schnittstelle 2 erstellte Netzwerk-Konfigurationsbeschreibung als auch die für die Schnittstelle 4 erstellte Container-Konfigurationsbeschreibung mit den zwei Teilkonfigurationsbeschreibungen 19 und 20.

Die Erstellung der ersten und der zweiten Teilkonfigurationsbeschreibung 19, 20 der Container-Konfigurationsbeschreibung 18 aus der Schablonen-Datei 12 erfolgt dabei, indem das Autokonfigurationsmodul 10 den mehrfach in der Schablonen-Datei 12 auftauchenden Platzhalter {{device.name}} durch konkrete Werte, vorliegend den konkreten Schnittstellen-Namen, also ens33p2 ersetzt.

Die erste Teilkonfigurationsbeschreibung 19 (und die zugehörigen Zeilen 14 bis 23 der Schablonen-Datei 12) betrifft vorliegend zwei Kommunikations-Container 21, 22, die jeweils wenigstens eine Anwendung umfassen, mittels derer Netzwerk-Funktionen bereitgestellt werden können.

Die erste Teilkonfigurationsbeschreibung 19 der Container-Konfigurationsbeschreibung 18 sieht - ausgehend von dem erstgenannten Beispiel einer Schablone 12 -konkret wie folgt aus, wobei diese wieder rein beispielhaft zu verstehen ist:

```
 version: "3"
 services:
  v6router:
    image: ...
    networks:
    - 1upstream
    - 2downstream
  anat64:
    image: ...
    networks:
    - 2downstream
 networks:
  1upstream:
    external: upstream
  2downstream:
    external: ens33p2
```

Ausgehend von dem vorstehend zweitgenannten Beispiel einer Schablonen-Datei 12 für die Downstream-Schnittstelle 4 ergibt sich für die erste Teilkonfigurationsbeschreibung 19:

```
 version: "3"
 services:
  v6router:
    image: ...
    networks:
    - 1upstream
    - 2ens33p2_downstream
  anat64:
    image: ...
    networks:
    - 2ens33p2_downstream
 networks:
  1upstream:
    external: true
  2ens33p2_downstream:
    external: true
```

Ausgehend von dem dritten Beispiel einer Schablonen-Datei 12 für die Downstream-Schnittstelle 4 ergibt sich für die erste Teilkonfigurationsbeschreibung 19:

```
 version: "3"
 services:
  v6router:
    image: ...
    networks:
    - 1upstream
    - 2ens33p2_downstream
  anat64:
    image: ...
    networks:
    - 2ens33p2_downstream
 networks:
  1upstream:
    external: true
  2ens33p2_downstream:
    external: true
```

Wie man erkennt, werden vorliegend - für alle drei Beispiele - Netzwerkfunktionen eines IPv6-Routers und eines NAT64-Routers in containerisierter Form bereitgestellt.

Die jeweilige erste Teilkonfigurationsbeschreibung 19 stellt die Konfigurationsbeschreibung für die in dem jeweiligen Kontext 15, 16, 17 gewünschten bzw. benötigten Kommunikations-Container 21, 22 dar. Sie betrifft also den vom Kontext 15, 16, 17 abhängigen, von der Art bzw. Rolle der betroffenen Schnittstelle 4 abhängigen Container-Ausbau. Sie dient insbesondere der weiteren Verarbeitung in einem Container-System bzw. Container-Werkzeug, wie etwa Docker Compose.

Die jeweilige zweite Teilkonfigurationsbeschreibung 20 (und die zugehörigen Zeilen 3 bis 12 bzw. 13 der jeweils zugehörigen Schablonen-Datei 12) betrifft Netzwerk-Funktionen zur Verbindung der Kommunikations-Container 20, 21 mit der betroffenen Hardware-Netzwerkschnittstelle 4 in Form einer Konfigurationsbeschreibung für vorliegend eine virtuelle Bridge auf Betriebssystemebene bzw. - für den Fall, dass eine Schnittstelle 4 nicht wie vorliegen hinzugefügt sondern entfernt wird, Löschungsanweisungen ("remove: ...") für eine solche. Diese greifen für den Fall, dass dem Autokonfigurationsmodul 10 kommuniziert wurde, dass eine Downstream-Schnittstelle 4 zur Anbindung von Feldbus-Netzwerksegmenten weggefallen ist.

Die zweite Teilkonfigurationsbeschreibung 20 sieht - ausgehend von dem erstgenannte Beispiel der Schablonen-Datei 12 - konkret wie folgt aus, was wiederum rein beispielhaft zu verstehen ist:

```
 #!/bin/bash
 ip link add brens33p2 type bridge
 ip link set brens33p2 up
 ip link set ens33p2 master brens33p2
 ip link ens33p2 up
```

Aus dem vorstehend zweitgenannten Beispiel der Schablonen-Datei 12 erhält man für die zweite Teilkonfigurationsbeschreibung 20:

```
 #!/bin/bash
 docker network create -d bridge \
 2ens33p2 downstream
 DSBR='docker network inspect -format
 '{{.Id|printf "br-%.12s"}}'
 2ens33p2 downstream'
 ip link set ens33p2 master $DSBR
```

Wie man erkennt, gleicht dieses Beispiel einer zweiten Teilkonfigurationsbeschreibung 20 in seiner Struktur dem Beispiel einer Netzwerk-Konfigurationsbeschreibung 18, welches vorstehend für die Schnittstelle 2 beschrieben wurde.

Aus dem dritten Beispiel der Schablonen-Datei 12 erhält man für die zweite Teilkonfigurationsbeschreibung 20:

```
 #!/bin/bash
 docker network create -d macvlan \
 -o parent=2ens33p2 \
 2ens33p2 downstream
```

Die jeweilige zweite Teilkonfigurationsbeschreibung 20 beschreibt - von der Konfigurationsbeschreibung 19 für den Container-Ausbau getrennt - erforderliche virtuellen Netzwerk-funktionen, die in dem jeweiligen Kontext 15, 16, 17 für das Verbinden der jeweiligen Kommunikations-Container 21, 22 mit der jeweiligen Schnittstelle 4 erforderlich sind. Vorliegend liegt die generierte Beschreibung als Shell-Script vor. Alternativ kann sie auch als "systemd units", als Clustersystem-Objekte (Kubernetes) oder dergleichen mehr ausgeführt sein.

Anhand dieser Beschreibung 20 sorgt das Autokonfigurationsmodul 10 insbesondere dafür, dass wenigstens ein das interne Netzwerk bildender Software-Switch anstatt mit dem Host-IP-Stack, wie es bei Docker üblich ist, allein mit der neu hinzugekommenen Schnittstelle 4 verknüpft wird.

Die erste Teilkonfigurationsbeschreibung 19 und die zweite Teilkonfigurationsbeschreibung 20 (gemäß dem ersten, zweiten oder dritten Beispiel) werden umgesetzt bzw. ausgeführt, um das System 1 gemäß dieser zu konfigurieren.

Die Umsetzung bzw. Ausführung der ersten, die Container 21, 22 betreffende Teilkonfigurationsbeschreibung 19 erfolgt dabei mittels des Container-Controller-Moduls 23 und die Umsetzung der zweiten, die Betriebssystemebene betreffenden Teilkonfigurationsbeschreibung 20 durch das Netzwerk-Controller-Modul 24.

Das Container-Controller-Modul 23 ist vorliegend Software-implementiert, konkret als Docker Composer Werkzeug ausgeführt bzw. umfasst ein solches, wobei dies beispielhaft zu verstehen ist. Wird alternativ oder zusätzlich zu Docker beispielsweise auf Kubernetes als Container-Technologie zurückgegriffen, kann das Container-Controller-Modul 23 auch als Kubernetes Pod Scheduler Controller ausgeführt sein bzw. einen solche umfassen. Andere oder weitere Container-Technologien sind natürlich ebenfalls möglich.

Es sei angemerkt, dass im Rahmen der hier beschriebenen Beispiele die zweite Teilkonfigurationsbeschreibung 20 vor der ersten Teilkonfigurationsbeschreibung 19 ausgeführt wird, wobei dies nicht einschränkend zu verstehen ist. Im Fall von Kubernetes beispielsweise werden die beiden Teilkonfigurationsbeschreibungen 19, 20 in den Cluster "eingespielt" und dann automatisch in der richtigen Reihenfolge durch die Cluster-Mechanismen ausgeführt (wie beispielsweise kubelet und CNI plugins). Für den Fall, dass Kubernetes als Instanz zur Ausführung der ersten Teilkonfigurationsbeschreibung zum Einsatz kommt, kann beispielsweise vorgesehen sein, dass ein "kubelet" auf dem System, auf dem der bzw. die Container 21, 22 gestartet werden sollen, seinerseits ein (Haupt-)CNI-Plugin startet und diesem die erste Teilkonfigurationsbeschreibung 19 zur Ausführung übergibt. Das Haupt-CNI-Plugin kann beispielsweise durch Multus gegeben sein. Dieses kann dann zum Beispiel anhand seiner eigenen Konfiguration sowie der Teilkonfigurationsbeschreibung 19 entscheiden, welche weiteren CNI-Plugins ggf. der Reihe nach aufzurufen sind, wie beispielsweise das "bridge" CNI-Plugin oder das "macvlan" CNI-Plugin. Das Haupt-CNI-Plugin kontrolliert hierbei die Weitergabe der erforderlichen Teile aus der Teilkonfigurationsbeschreibung 19 zu den aufzurufenden CNI-Plugins.

Infolge der Ausführung der ersten Teilkonfigurationsbeschreibung 19 durch das Container-Controller-Modul 23 werden die Kommunikations-Container 21, 22 mit den IPv6- und NAT64-Router-Funktionen erzeugt.

Das Autokonfigurationsmodul 10 teilt dem Container-Controller-Modul 23 vorliegend weiterhin direkt oder indirekt mit, dass die Kommunikations-Container 21, 22 im vorliegenden Falle zu starten sind, da die Schnittstelle 4 hinzugefügt und nicht entfernt wurde. Wäre letzteres alternativ der Fall, würde das Autokonfigurationsmodul 12 dem Container-Controller-Modul 23 mitteilen, dass die Kommunikations-Container 21, 22 nicht zu starten sondern zu stoppen sind.

Das Netzwerk-Controller-Modul 24 für die Ausführung bzw. Umsetzung der zweiten Teilkonfigurationsbeschreibung 20 ist, wie oben bereits angemerkt, ebenfalls Software-implementiert und als Shell-Script-Interpreter ausgeführt bzw. umfasst einen solchen.

Es sei angemerkt, dass für den Fall, dass anstelle einer Downstream-Schnittstelle 4 eine andere Art von Schnittstelle 3 bzw. eine Schnittstelle 3, mit einer anderen Rolle hinzugefügt wird, der Ablauf völlig analog sein kann. Lediglich der konkrete Kommunikations-Container-Ausbau gemäß der ersten Teilkonfigurationsbeschreibung 19 und die virtuellen Netzfunktionen gemäß der zweiten Teilkonfigurationsbeschreibung 20 können bzw. werden dann abweichen. Für den Fall, dass beispielsweise eine Drahtlos-Netzwerkschnittstelle 3 hinzugefügt wird, würden nicht die Funktionen eines IPv6- und NAT64-Routers containersiert bereitgestellt, sondern zum Beispiel eine geeignete Software für einen WLAN Access-Point. Ein entsprechender Kommunikations-Container 25 für diesen Kontext 17 ist in der Figur ebenfalls rein schematisch dargestellt.

Selbstverständlich ist es auch möglich, dass alternativ zu den vorstehenden Beispielen für die Schnittstelle 2 von dem Autokonfigurationsmodul 10 anstelle einer Netzwerk-Konfigurationsbeschreibung 18 eine Container-Konfigurationsbeschreibung 18 erstellt wird, wenn für die Schnittstelle 2 einer oder mehrere Kommunikations-Container 21, 22, 25 vorgesehen werden sollen. Der Ablauf für die Schnittstelle 2 könnte dann analog zu demjenigen sein, der vorstehend für die Schnittstelle 4 beschrieben wurde.

Sofern einer Schnittstelle aufgrund ihrer Rolle wenigstens ein Kommunikations-Container 21, 22, 25 zuzuordnen ist, kann eine Container-Konfigurationsbeschreibung 18 erstellt werden, und für den Fall, dass kein Kommunikations-Container 21, 22, 25 erforderlich bzw. gewünscht ist, eine Netzwerk-Konfigurationsbeschreibung 18.

Weiterhin sei betont, dass das Autokonfigurationsmodul 10 für sämtliche Netzwerkschnittstellen 2, 3, 4, 5 eines Systems 1 zum Einsatz kommen kann, jedoch nicht muss. Die erfindungsgemäße Vorgehensweise kann selbstverständlich auch in Kombination mit der aus dem Stand der Technik vorbekannten Vorgehensweise zum Einsatz kommen. Beispielsweise kann alternativ dazu, dass, wie vorstehend beschrieben, das Autokonfigurationsmodul 10 für die Schnittstelle 2 eine Netzwerk-Konfigurationsbeschreibung 18 erstellt, eine solche auf konventionelle Weise insbesondere im Rahmen einer manuellen Konfiguration - etwa durch einen Nutzer - erstellt werden bzw. worden sein. Die manuell erhaltene Netzwerk-Kommunikationsbeschreibung 18 kann dabei zum Beispiel genauso aussehen, wie die vorstehend genannte, vom Autokonfigurationsmodul 18 unter Verwendung der Schablonen-Datei 14 erhaltene.

In bevorzugter Ausgestaltung gilt zumindest für diejenigen Schnittstellen 3, 4, 5 eines Systems 1, für die jeweils einer oder mehrere Kommunikations-Container 21, 22, 25 vorzusehen sind, dass für diese von dem Autokonfigurationsmodul 10 eine Container-Konfigurationsbeschreibung 18 automatisch erstellt wird. Wenn ein möglichst umfassender automatischer Ablauf gewünscht ist, was in der Regel besonders vorteilhaft ist, können zusätzlich auch für sämtliche Schnittstellen 2 eines Systems, für die keine Kommunikations-Container 21, 22, 25 erforderlich sind, Netzwerk-Konfigurationsbeschreibungen 18 von dem Autokonfigurationsmodul 10 erstellt werden, wie vorstehend für die Schnittstelle 2 beispielhaft beschrieben.

Durch die erfindungsgemäße Vorgehensweise kann die "Lücke" zwischen industriellen Anwendern und der Container-Technologie, wie beispielsweise Docker, geschlossen werden. So wird es möglich, die großen Vorteile dieser Technologie für Netzwerkfunktionen nutzbar zu machen, ohne dass es seitens der Anwender eines speziellen IT- bzw. Netzwerks- bzw. Container-Know-Hows bedarf. Unter Verwendung des Autokonfigurationsmoduls 10 und der Schablonen-Dateien 12, 13, 14 können Container mit Netzwerkfunktionen dynamisch und automatisch mit ihrer physikalischen Netz-Außenwelt verbunden werden, dies passend für den jeweiligen Kontext 15, 16, 17. Industrielle Anwender müssen kein IT-Fachwissen über Container, etwa Dock-Container, oder über zugehörige Werkzeuge, etwa Docker Network Driver, oder auch über Software-Switches haben, und können dennoch die Vorteile dieser Technologie für eine automatische Konfiguration im Falle einer Änderung bzw. Ergänzung des Hardware-Schnittstellenausbaus ihrer Systeme bzw. für deren Inbetriebnahme nutzen. Es wird besonders einfach für Anwender, Systeme 1 aus dem Bereich der Automatisierungstechnik um Netzwerkzu- oder Abgänge zu erweitern. Eine manuelle Konfiguration mittels zusätzlichem Engineering- bzw. Konfigurations-Werkzeug(en) ist nicht mehr nötig. Es genügt das Anstecken der entsprechenden Netzwerk-Schnittellen-Hardware, an welches sich dann eine vollständig automatische Konfiguration anschließt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden. Der Schutzumfang der Erfindung ist durch die Ansprüche definiert.

## Patentansprüche

1. Verfahren zum automatischen Konfigurieren eines Systems (1), welches mindestens eine erste Netzwerkschnittstelle aufweist, die mit einem ersten externen Netzwerk verbindbar ist und eine zweite Netzwerkschnittstelle aufweist, die mit einem zweiten externen Netzwerk verbindbar ist, wobei die genannten Netzwerkschnittstellen physikalische und/oder virtuelle Netzwerkschnittstellen sein können, bei dem
- bei Inbetriebnahme des Systems (1) und/oder im laufenden Betrieb durch ein Betriebssystem des Systems (1) überwacht wird, welche physikalischen und virtuellen Netzwerkschnittstellen (2, 3, 4, 5) das System (1) aufweist,
- für den Fall, dass eine physikalische oder virtuelle Netzwerkschnittstelle (2, 3, 4, 5) bei Inbetriebnahme des Systems (1) erstmals erfasst wird, und/oder eine physikalische oder virtuelle Netzwerkschnittstelle (2, 3, 4, 5) im Betrieb des Systems (1) neu hinzukommt oder wegfällt, dies einem Autokonfigurationsmodul (10) des Systems (1) zusammen mit einer Information über die Art und Rolle der betroffenen Netzwerkschnittstelle (2, 3, 4, 5) und die Art des mit dieser verbundenen oder zu verbindenden externen Netzwerkes (6, 7, 8, 9) kommuniziert wird,
- bei Änderung oder Hinzukommen einer Netzwerkschnittstelle das Autokonfigurationsmodul (10) für wenigstens eine der betroffenen Netzwerkschnittstellen (2, 3, 4, 5) unter Verwendung einer Schablonen-Datei (12, 13, 14) eine Konfigurationsbeschreibung (18) erstellt, die eine erste Teilkonfigurationsbeschreibung (19) für wenigstens einen Kommunikations-Container (21, 22, 25), der wenigstens eine Anwendung umfasst, mittels derer Netzwerk-Funktionen bereitgestellt werden können, und eine zweite Teilkonfigurationsbeschreibung (20) für Netzwerk-Funktionen zur Verbindung des wenigstens einen Kommunikations-Containers (21, 22, 25) mit der wenigstens einen betroffenen Netzwerkschnittstelle (2, 3, 4, 5) umfasst, und
- die zweite Teilkonfigurationsbeschreibung durch ein Netzwerk-Controller-Modul ausgeführt wird, und die erste Teilkonfigurationsbeschreibung durch ein Container-Controller-Modul ausgeführt wird, um das System (1) gemäß dieser zu konfigurieren, wobei der wenigstens eine Kommunikations-Container (21, 22, 25) erzeugt, gestartet und mit der betroffenen Netzwerkschnittstelle und dem internen Netzwerk des Systems (2, 3, 4, 5) verbunden wird so dass möglichst rasch eine durchgehende Konnektivität zwischen besagtem ersten und zweiten externen Netzwerk hergestellt wird, wobei dem Autokonfigurationsmodul (10) das erstmalige Erfassen einer physikalischen oder virtuellen Netzwerkschnittstelle (2, 3, 4, 5) bei Inbetriebnahme des Systems (1) und/oder das neue Hinzukommen und/oder Wegfallen einer physikalischen oder virtuellen Netz-werkschnittstelle (2, 3, 4, 5) im Betrieb des Systems (1) kommuniziert wird, indem ein auf dem System (1) laufendes Betriebssystem dem Autokonfigurationsmodul (10) ein entsprechendes Ereignis meldet.

2. Verfahren nach Anspruch 1,
**dadurch gekennzeichnet, dass** die Konfigurationsbeschreibung (18) erhalten wird, indem einer oder mehrere in der Schablonen-Datei (12) vorgesehene Platzhalter durch wenigstens einen zu der betroffenen Netzwerkschnittstelle (2, 3, 4, 5) gehörigen Parameter ersetzt werden.

3. Verfahren nach Anspruch 1 oder 2,
**dadurch gekennzeichnet, dass** die Schablonen-Datei (12) aus einer Mehrzahl von unterschiedlichen Schablonen-Dateien (12, 13, 14) ausgewählt wird.

4. Verfahren nach Anspruch 3,
**dadurch gekennzeichnet, dass** die Auswahl anhand von in den Schablonen-Dateien (12, 13, 14) enthaltenen Filterregeln erfolgt.

5. Verfahren nach Anspruch 3 oder 4,
**dadurch gekennzeichnet, dass** für mehrere Arten von physikalischer und/oder virtueller Netzwerkschnittstelle (2, 3, 4, 5), welche das System (1) aufweisen kann, jeweils wenigstens eine Schablonen-Datei (12, 13, 14) gespeichert ist, und/oder dass für zumindest drei verschiedene Arten von physikalischen und/oder virtuellen Netzwerkschnittstellen (2, 3, 4, 5) jeweils wenigstens eine Schablonen-Datei (12, 13, 14) gespeichert ist.

6. Verfahren nach einem der vorhergehenden Ansprüche, **dadurch gekennzeichnet, dass** der wenigstens eine Kommunikations-Container (21, 22, 25) von besagtem Container-Controller-Modul (23) des Systems (1) erzeugt wird.

7. Verfahren nach einem der vorhergehenden Ansprüche,
**dadurch gekennzeichnet, dass** wenigstens eine Anwendung des wenigstens einen Kommunikations-Containers (21, 22, 25) gemäß der ersten Teilkonfigurationsbeschreibung (19) Funktionen eines IPv6- und/oder NAT64-Routers und/oder eines Namensdienst-Clients oder Servers und/oder eines Brouters bereitstellt und/oder durch eine Software für einen WLAN-Access-Point gegeben ist oder eine solche umfasst.

8. Verfahren nach einem der vorhergehenden Ansprüche,
**dadurch gekennzeichnet, dass** für den Fall, dass eine physikalische oder virtuelle Netzwerkschnittstelle (2, 3, 4, 5) im Betrieb des Systems wegfällt, das Autokonfigurationsmodul (10) das Entfernen und/oder Deaktivieren von Netzwerk-Funktionen für die betroffene Schnittstelle (2, 3, 4, 5) und/oder das Stoppen von Kommunikations-Containern für die betroffene Netzwerkschnittstelle (2, 3, 4, 5) veranlasst.

9. Verfahren nach einem der vorhergehenden Ansprüche,
**dadurch gekennzeichnet, dass** das Autokonfigurationsmodul (10) für wenigstens eine weitere der betroffenen Netzwerkschnittstellen (2, 3, 4, 5) eine Netzwerk-Konfigurationsbeschreibung (18) erstellt, die wenigstens ein virtuelles Netzwerk und/oder wenigstens eine virtuelle Bridge und/oder wenigstens einen virtuellen Switch für die wenigstens eine weitere Netzwerkschnittstelle (2, 3, 4, 5) und keinen Kommunikations-Container für diese betrifft.

10. System (1) welches mindestens eine erste Netzwerkschnittstelle aufweist, die mit einem ersten externen Netzwerk verbindbar ist und eine zweite Netzwerkschnittstelle aufweist, die mit einem zweiten externen Netzwerk verbindbar ist, wobei die genannten Netzwerkschnittstellen physikalische und/oder virtuelle Netzwerkschnittstellen sein können, wobei das System (1) derart ausgebildet und/oder eingerichtet ist,
- bei Inbetriebnahme des Systems (1) und/oder im laufenden Betrieb durch ein Betriebssystem des Systems (1) überwacht wird, welche physikalischen und virtuellen Netzwerkschnittstellen (2, 3, 4, 5) das System (1) aufweist,
- dass einem Autokonfigurationsmodul (10) des Systems (1) gemeldet wird, wenn eine physikalische oder virtuelle Netzwerkschnittstelle (2, 3, 4, 5) bei Inbetriebnahme des Systems erstmals erfasst wird, und/oder eine physikalische oder virtuelle Netzwerkschnittstelle (2, 3, 4, 5) im Betrieb des Systems (1) neu hinzukommt oder wegfällt, wobei zusammen mit einer solchen Meldung eine Information über die Art und Rolle der betroffenen Netzwerkschnittstelle (2, 3, 4, 5) und die Art des mit dieser verbundenen oder zu verbindenden externen Netzwerkes (6, 7, 8, 9) kommuniziert wird,
- dass das Autokonfigurationsmodul bei Änderung oder Hinzukommen einer Netzwerkschnittstelle (10) für wenigstens eine der betroffenen Netzwerkschnittstellen (2, 3, 4, 5) unter Verwendung einer Schablonen-Datei (12, 13, 14) eine Konfigurationsbeschreibung (18) erstellt, die eine erste Teilkonfigurationsbeschreibung (10) für wenigstens einen Kommunikations-Container (21, 22, 25), der wenigstens eine Anwendung umfasst, mittels derer Netzwerk-Funktionen für die oder die jeweils betroffene Schnittstelle (2, 3, 4, 5) bereitgestellt werden können, und eine zweite Teilkonfigurationsbeschreibung (20) für Netzwerk-Funktionen zur Verbindung des wenigstens einen Kommunikations-Containers (21, 22, 25) mit der oder der jeweils betroffenen Schnittstelle (2, 3, 4, 5) umfasst, und
- dass die zweite Teilkonfigurationsbeschreibung durch ein Netzwerk-Controller-Modul (18) ausgeführt wird, und die erste Teilkonfigurationsbeschreibung durch ein Container-Controller-Modul ausgeführt wird, um das System (1) gemäß dieser zu konfigurieren, wobei der wenigstens eine Kommunikations-Container (21, 22, 25) erzeugt, gestartet und mit der wenigstens einen betroffenen Netzwerkschnittstelle und dem internen Netzwerk des Systems (2, 3, 4, 5) verbunden wird, so dass möglichst rasch eine durchgehende Konnektivität zwischen besagten ersten und zweiten externen Netzwerk hergestellt wird, wobei das System (1) ausgebildet und/oder eingerichtet ist, dem Autokonfigurationsmodul Anmeldeaktenzeichen 19779390.4 (10) das erstmalige Erfassen einer physikalischen oder virtuellen Netzwerkschnittstelle (2, 3, 4, 5) bei Inbetriebnahme des Systems (1) und/oder das neue Hinzukommen und/oder Wegfallen einer physikalischen oder virtuellen Netzwerkschnittstelle (2, 3, 4, 5) im Betrieb des Systems (1) zu kommunizieren, indem ein auf dem System laufendes Betriebssystem dem Autokonfigurationsmodul (10) ein entsprechendes Ereignis meldet.

11. System nach Anspruch 10, **dadurch gekennzeichnet, dass** das Autokonfigurationsmodul (10) ausgebildet und/oder eingerichtet ist, um einen oder mehrere in der Schablonen-Datei (12, 13, 14) vorgesehene Platzhalter durch wenigstens einen zu der oder der jeweils betroffenen Netzwerkschnitstelle (2, 3, 4, 5) gehörigen Parameter zu ersetzen und so die Konfigurationsbeschreibung (18) zu erhalten.

12. System nach Anspruch 10 oder 11, **dadurch gekennzeichnet, dass** das Autokonfigurationsmodul (10) ausgebildet und/oder eingerichtet ist, um die Schablonen-Datei (12, 13, 14) aus einer Mehrzahl unterschiedlichen Schablonen-Dateien (12, 13, 14) auszuwählen.

13. System nach Anspruch 12, **dadurch gekennzeichnet, dass** das Autokonfigurationsmodul (10) ausgebildet und/oder eingerichtet ist, um die Auswahl anhand von in den Schablonen-Dateien (12, 13, 14) enthaltenen Filterregeln zu treffen.

14. System nach Anspruch 12 oder 13, **dadurch gekennzeichnet, dass** für mehrere Arten von physikalischen und/oder virtuellen Netzwerkschnittstellen (2, 3, 4, 5), welche das System (1) aufweisen kann, jeweils wenigstens eine Schablonen-Datei (12, 13, 14) auf dem System (1) gespeichert ist, und/oder dass für zumindest drei verschiedene Arten von physikalischen und/oder virtuellen Netzwerkschnittstellen (2, 3, 4, 5) jeweils wenigstens eine Schablonen-Datei (12, 13, 14) auf dem System (1) gespeichert ist.

15. System nach einem der Ansprüche 10 bis 14, **dadurch gekennzeichnet, dass** ein Container-Controller-Modul (23) des Systems (1) ausgebildet und/oder eingerichtet ist, um den wenigstens einen Kommunikations-Container (21, 22, 25) zu erzeugen.

16. System (1) nach einem der Ansprüche 10 bis 15, **dadurch gekennzeichnet, dass** das System (1) derart ausgebildet und/oder eingerichtet ist, dass wenigstens eine Anwendung des wenigstens einen Kommunikations-Containers (21, 22, 25) gemäß der ersten Teilkonfigurationsbeschreibung (19) Funktionen eines IPv6- und/oder NAT64-Routers und/oder eines Namensdienst-Clients oder Servers und/oder eines Brouters bereitstellt und/oder durch eine Software für einen WLAN-Access-Point gegeben ist oder eine solche umfasst.

17. System (1) nach einem der Ansprüche 10 bis 16, **dadurch gekennzeichnet, dass** das System (1) derart ausgebildet und/oder eingerichtet ist, dass für den Fall, dass dem Autokonfigurationsmodul (10) gemeldet wird, dass eine physikalische oder virtuelle Hardware-Netzwerkschnittstelle (2, 3, 4, 5) im Betrieb des Systems (1) wegfällt, das Autokonfigurationsmodul (10) das Entfernen und/oder Deaktivieren von Netzwerk-Funktionen und/oder virtuellen Netzwerken für die betroffene Netzwerkschnittstelle (2, 3, 4, 5) veranlasst.

18. System (1) nach einem der Ansprüche bis 17, **dadurch gekennzeichnet, dass** das Autokonfigurationsmodul (10) ausgebildet und/oder eingerichtet ist, für wenigstens eine weitere der betroffenen Netzwerkschnittstellen (2, 3, 4, 5) eine Netzwerk-Konfigurationsbeschreibung (18) zu erstellen, die wenigstens ein virtuelles Netzwerk und/oder wenigstens eine virtuelle Bridge und/oder wenigstens einen virtuellen Switch für die wenigstens eine weitere Netzwerkschnittstelle (2, 3, 4, 5) und keinen Kommunikations-Container für diese betrifft.

19. Computerlesbares Medium, das Instruktionen umfasst, die, wenn sie auf wenigstens einem Computer ausgeführt werden, den wenigstens einen Computer veranlassen, die Methode gemäß den Ansprüchen 1 bis 9 auszuführen.

## Claims

1. Method for automatically configuring a system (1) comprising at least one first network interface, which can be connected to a first external network, and a second network interface, which can be connected to a second external network, said network interfaces being able to be physical and/or virtual network interfaces, in which
- startup of the system (1) and/or ongoing operation by an operating system of the system (1) involve(s) monitoring being performed to ascertain what physical and/or virtual network interfaces (2, 3, 4, 5) the system (1) has,
- if a physical or virtual network interface (2, 3, 4, 5) is detected for the first time on startup of the system (1), and/or a physical or virtual network interface (2, 3, 4, 5) appears or disappears during operation of the system (1), this is communicated to an autoconfiguration module (10) of the system (1) together with information about the type and role of the affected network interface (2, 3, 4, 5) and the type of the external network (6, 7, 8, 9) connected or needing to be connected to said network interface,
- if a network interface changes or appears, the autoconfiguration module (10) uses a template file (12, 13, 14) to produce for at least one of the affected network interfaces (2, 3, 4, 5) a configuration description (18) that comprises a first partial configuration description (19) for at least one communication container (21, 22, 25), which comprises at least one application by means of which network functions can be provided, and a second partial configuration description (20) for network functions for connecting the at least one communication container (21, 22, 25) to the at least one affected network interface (2, 3, 4, 5), and
- the second partial configuration description is executed by a network controller module, and the first partial configuration description is executed by a container controller module, in order to configure the system (1) in accordance with said partial configuration description, wherein the at least one communication container (21, 22, 25) is generated, started and connected to the affected network interface and to the internal network of the system (2, 3, 4, 5), so that continuous connectivity is produced between said first and second external networks as quickly as possible,
wherein the detection of a physical or virtual network interface (2, 3, 4, 5) for the first time on startup of the system (1), and/or the appearance and/or disappearance of a physical or virtual network interface (2, 3, 4, 5) during operation of the system (1), is communicated to the autoconfiguration module (10) by virtue of an operating system that runs on the system (1) reporting an applicable event to the autoconfiguration module (10).

2. Method according to Claim 1,
**characterized in that** the configuration description (18) is obtained by virtue of one or more wildcards provided in the template file (12) being replaced with at least one parameter associated with the affected network interface (2, 3, 4, 5).

3. Method according to Claim 1 or 2,
**characterized in that** the template file (12) is selected from a plurality of different template files (12, 13, 14).

4. Method according to Claim 3,
**characterized in that** the selection is made on the basis of filter rules contained in the template files (12, 13, 14).

5. Method according to Claim 3 or 4,
**characterized in that** in each case at least one template file (12, 13, 14) is stored for multiple types of physical and/or virtual network interfaces (2, 3, 4, 5) that the system (1) can have, and/or **in that** in each case at least one template file (12, 13, 14) is stored for at least three different types of physical and/or virtual network interfaces (2, 3, 4, 5).

6. Method according to one of the preceding claims,
**characterized in that** the at least one communication container (21, 22, 25) is generated by said container controller module (23) of the system (1).

7. Method according to one of the preceding claims,
**characterized in that** at least one application of the at least one communication container (21, 22, 25), according to the first partial configuration description (19), provides functions of an IPv6 and/or NAT64 router and/or of a name service client or server and/or of a brouter and/or is provided by, or comprises, software for a WLAN access point.

8. Method according to one of the preceding claims,
**characterized in that** if a physical or virtual network interface (2, 3, 4, 5) disappears during operation of the system, the autoconfiguration module (10) prompts the removal and/or deactivation of network functions for the affected interface (2, 3, 4, 5) and/or the stopping of communication containers for the affected network interface (2, 3, 4, 5).

9. Method according to one of the preceding claims,
**characterized in that** the autoconfiguration module (10) produces for at least one further instance of the affected network interfaces (2, 3, 4, 5) a network configuration description (18) that concerns at least one virtual network and/or at least one virtual bridge and/or at least one virtual switch for the at least one further network interface (2, 3, 4, 5) and no communication container therefor.

10. System (1) comprising at least one first network interface, which can be connected to a first external network, and a second network interface, which can be connected to a second external network, said network interfaces being able to be physical and/or virtual network interfaces,
wherein the system (1) is designed and/or configured such
- that startup of the system (1) and/or ongoing operation by an operating system of the system (1) involve(s) monitoring being performed to ascertain what physical and virtual network interfaces (2, 3, 4, 5) the system (1) has,
- that an autoconfiguration module (10) of the system (1) is sent a report if a physical or virtual network interface (2, 3, 4, 5) is detected for the first time on startup of the system, and/or a physical or virtual network interface (2, 3, 4, 5) appears or disappears during operation of the system (1), wherein information about the type and role of the affected network interface (2, 3, 4, 5) and/or the type of the external network (6, 7, 8, 9) connected or needing to be connected to said network interface is communicated together with such a report,
- that, if a network interface changes or appears, the autoconfiguration module (10) uses a template file (12, 13, 14) to produce for at least one of the affected network interfaces (2, 3, 4, 5) a configuration description (18) that comprises a first partial configuration description (19) for at least one communication container (21, 22, 25), which comprises at least one application by means of which network functions can be provided for the or the respective affected interface (2, 3, 4, 5), and a second partial configuration description (20) for network functions for connecting the at least one communication container (21, 22, 25) to the or the respective affected interface (2, 3, 4, 5), and
- that the second partial configuration description is executed by a network controller module (18), and the first partial configuration description is executed by a container controller module, in order to configure the system (1) in accordance with said partial configuration decription, wherein the at least one communication container (21, 22, 25) is generated, started and connected to the at least one affected network interface and to the internal network of the system (2, 3, 4, 5),
so that continuous connectivity is produced between said first and second external networks as quickly as possible, wherein the system (1) is designed and/or configured to communicate the detection of a physical or virtual network interface (2, 3, 4, 5) for the first time on startup of the system (1), and/or the appearance and/or disappearance of a physical or virtual network interface (2, 3, 4, 5) during operation of the system (1), to the autoconfiguration module (10) by virtue of an operating system that runs on the system reporting an applicable event to the autoconfiguration module (10).

11. System according to Claim 10,
**characterized in that** the autoconfiguration module (10) is designed and/or configured to replace one or more wildcards provided in the template file (12, 13, 14) with at least one parameter associated with the or the respective affected network interface (2, 3, 4, 5) and **in that** way to obtain the configuration description (18).

12. System according to Claim 10 or 11,
**characterized in that** the autoconfiguration module (10) is designed and/or configured to select the template file (12, 13, 14) from a plurality of different template files (12, 13, 14) .

13. System according to Claim 12,
**characterized in that** the autoconfiguration module (10) is designed and/or configured to make the selection on the basis of filter rules contained in the template files (12, 13, 14).

14. System according to Claim 12 or 13,
**characterized in that** in each case at least one template file (12, 13, 14) is stored on the system (1) for multiple types of physical and/or virtual network interfaces (2, 3, 4, 5) that the system (1) can have, and/or **in that** in each case at least one template file (12, 13, 14) is stored on the system (1) for at least three different types of physical and/or virtual network interfaces (2, 3, 4, 5).

15. System according to one of Claims 10 to 14,
**characterized in that** a container controller module (23) of the system (1) is designed and/or configured to generate the at least one communication container (21, 22, 25).

16. System (1) according to one of Claims 10 to 15,
**characterized in that** the system (1) is designed and/or configured such that at least one application of the at least one communication container (21, 22, 25), according to the first partial configuration description (19), provides functions of an IPv6 and/or NAT64 router and/or of a name service client or server and/or of a brouter and/or is provided by, or comprises, software for a WLAN access point.

17. System (1) according to one of Claims 10 to 16,
**characterized in that** the system (1) is designed and/or configured such that if the autoconfiguration module (10) is sent a report that a physical or virtual network interface (2, 3, 4, 5) disappears during operation of the system (1), the autoconfiguration module (10) prompts the removal and/or deactivation of network functions and/or virtual networks for the affected network interface (2, 3, 4, 5).

18. System (1) according to one of Claims 10 to 17,
**characterized in that** the autoconfiguration module (10) is designed and/or configured to produce for at least one further instance of the affected network interfaces (2, 3, 4, 5) a network configuration description (18) that concerns at least one virtual network and/or at least one virtual bridge and/or at least one virtual switch for the at least one further network interface (2, 3, 4, 5) and no communication container therefor.

19. Computer-readable medium comprising instructions that, when executed on at least one computer, prompt the at least one computer to perform the method according to Claims 1 to 9.

## Revendications

1. Procédé de configuration automatique d'un système (1), qui a au moins une première interface de réseau, qui peut être reliée à un premier réseau extérieur et qui a une deuxième interface de réseau, qui peut être reliée à un deuxième réseau extérieur, dans lequel lesdites interfaces de réseau peuvent être des interfaces de réseau physiques et/ou virtuelles, dans lequel
- à la mise en fonctionnement du système (1) ou dans le fonctionnement courant, on contrôle, par un système de fonctionnement du système (1), les interfaces (2, 3, 4, 5) de réseau physiques et virtuelles qu'a le système (1),
- dans le cas où on détecte, pour la première fois lors de la mise en service du système (1), une interface (2, 3, 4, 5) de réseau physique ou virtuelle et/ou une interface (2, 3, 4, 5) de réseau physique ou virtuelle s'ajoute nouvellement ou disparaît dans le fonctionnement du système (1), on le communique à un module (10) d'autoconfiguration du système (1) ensemble avec une information sur le type et le rôle de l'interface (2, 3, 4, 5) de réseau concernée et le type du réseau (6, 7, 8, 9) extérieur relié ou à relier à celle-ci,
- à la modification ou à l'addition d'une interface de réseau, le module (10) d'autoconfiguration établit, pour au moins l'une des interfaces (2, 3, 4, 5) de réseau concernées, en utilisant un fichier (12, 13, 14) modèle, une description (18) de configuration, qui comprend une première description (19) partielle de configuration pour au moins un conteneur (21, 22, 25) de communication, comprenant au moins une application, au moyen de laquelle des fonctions de réseau peuvent être mises à disposition, et une deuxième description (20) partielle de configuration pour des fonctions de réseau, afin de relier le au moins un conteneur (21, 22, 25) de communication à la au moins une interface (2, 3, 4, 5) de réseau concernée, et
- on réalise la deuxième description partielle de configuration par un module de contrôleur de réseau et on réalise la première description partielle de configuration par un module de contrôleur de récipient, afin de configurer le système (1) suivant celle-ci, dans lequel on fait débuter et relie à l'interface de réseau concernée et au réseau intérieur du système (2, 3, 4, 5) le au moins un conteneur (21, 22, 25) de communication, de manière à produire, le plus rapidement possible, une connectivité continue entre le premier et le deuxième réseau extérieur, dans lequel on communique au module (10) d'autoconfiguration la détection pour la première fois d'une interface (2, 3, 4, 5) de réseau physique ou virtuelle à la mise en fonctionnement du système (1) et/ou à la nouvelle addition et/ou à la suppression d'une interface (2, 3, 4, 5) de réseau physique ou virtuelle dans le fonctionnement du système (1), par le fait qu'un système de fonctionnement se déroulant sur le système (1) annonce un événement correspondant au module (10) d'autoconfiguration.

2. Procédé suivant la revendication 1,
**caractérisé en ce que** l'on obtient la description (18) de configuration en remplaçant un ou plusieurs emplacements prévus dans le fichier (12) modèle par au moins un paramètre appartenant à l'interface (2, 3, 4, 5) de réseau concernée.

3. Procédé suivant la revendication 1 ou 2,
**caractérisé en ce que** l'on choisit le fichier (12) modèle parmi une pluralité de fichiers (12, 13, 14) modèles différents.

4. Procédé suivant la revendication 3,
**caractérisé en ce que** le choix s'effectue à l'aide de règles de filtrage contenues dans les fichiers (12, 13, 14) modèles.

5. Procédé suivant la revendication 3 ou 4,
**caractérisé en ce que**, pour plusieurs types d'interfaces (2, 3, 4, 5) de réseau physiques et/ou virtuelles, que peut comporter le système (1), respectivement au moins un fichier (12, 13, 14) modèle est mis en mémoire et/ou **en ce que**, pour au moins trois types différents d'interfaces (2, 3, 4, 5) de réseau physiques et/ou virtuelles, respectivement au moins un fichier (12, 13, 14) modèle est mis en mémoire.

6. Procédé suivant l'une des revendications précédentes,
**caractérisé en ce que** l'on produit le au moins un conteneur (21, 22, 25) de communication par ledit module (23) de contrôleur de conteneur du système (1).

7. Procédé suivant l'une des revendications précédentes,
**caractérisé en ce qu'**au moins une application du au moins un conteneur (21, 22, 25) de communication met à disposition, suivant la première description (19) partielle de configuration, des fonctions d'un routeur IPv6 et/ou NAT64 et/ou d'un service de dénomination client ou d'un serveur de service de dénomination client et/ou d'un pont-routeur et/ou est donnée par un logiciel pour un point d'accès WLAN ou en comprend un.

8. Procédé suivant l'une des revendications précédentes,
**caractérisé en ce que**, dans le cas où une interface (2, 3, 4, 5) de réseau physique ou virtuelle est supprimée dans le fonctionnement du système, le module (10) d'autoconfiguration provoque la suppression et/ou la désactivation de fonctions de réseau pour l'interface (2, 3, 4, 5) concernée et/ou l'arrêt de conteneur de communication pour l'interface (2, 3, 4, 5) de réseau concernée.

9. Procédé suivant l'une des revendications précédentes,
**caractérisé en ce que** le module (10) d'autoconfiguration établit, pour au moins une autre des interfaces (2, 3, 4, 5) de réseau concernée, une description (18) de configuration de réseau, qui concerne au moins un réseau virtuel et/ou au moins un bridge virtuel et/ou au moins un switch virtuel, pour la au moins une autre interface (2, 3, 4, 5) de réseau et ne concerne pas de conteneur de communication pour celle-ci.

10. Système (1), qui a au moins une première interface de réseau, qui peut être reliée à un premier réseau extérieur et qui a une deuxième interface de réseau, qui peut être reliée à un deuxième réseau extérieur, dans lequel lesdites interfaces de réseau peuvent être des interfaces de réseau physiques et/ou virtuelles, dans lequel le système (1) est constitué et/ou agencé, de manière à ce que
- à la mise en fonctionnement du système (1) ou dans le fonctionnement courant, on contrôle, par un système de fonctionnement du système (1), les interfaces (2, 3, 4, 5) de réseau physiques et virtuelles qu'a le système (1),
- si on détecte, pour la première fois lors de la mise en service du système (1), une interface (2, 3, 4, 5) de réseau physique ou virtuel et/ou une interface (2, 3, 4, 5) de réseau physique ou virtuel s'ajoute nouvellement ou disparaît dans le fonctionnement du système (1), on le communique à un module (10) d'autoconfiguration du système ensemble avec une information sur le type et le rôle de l'interface (2, 3, 4, 5) de réseau concernée et le type du réseau (6, 7, 8, 9) extérieur relié ou à relier à celle-ci,
- à la modification ou à l'addition d'une interface de réseau, le module (10) d'autoconfiguration établit, pour au moins l'une des interfaces (2, 3, 4, 5) de réseau concernées, en utilisant un fichier (12, 13, 14) modèle, une description (18) de configuration, qui comprend la première description (10) partielle de configuration pour au moins un conteneur (21, 22, 25) de communication, comprenant au moins une application, au moyen de laquelle des fonctions de réseau peuvent être mises à disposition pour la ou les interfaces (2, 3, 4, 5) concernées respectivement, et comprend une deuxième description (20) partielle de configuration pour des fonctions de réseau, pour la liaison du au moins un conteneur (21, 22, 25) de communication à la au moins une interface (2, 3, 4, 5) de réseau concernée, et
- on réalise la deuxième description partielle de configuration par un module (18) contrôleur de réseau et on réalise la première description partielle de configuration par un module de contrôleur de conteneur, afin de configurer le système (1) suivant celle-ci, dans lequel on fait débuter et relie à l'interface de réseau concerné et au réseau intérieur du système (2, 3, 4, 5) le au moins un conteneur (21, 22, 25) de communication, de manière à produire, le plus rapidement possible, une connectivité continue entre le premier et le deuxième réseau extérieur, dans lequel
le système (1) est constitué et/ou agencé pour communiquer au module (10) de configuration, à la détection pour la première fois d'une interface (2, 3, 4, 5) de réseau physique ou virtuelle à la mise en fonctionnement du système (1) et/ou à la nouvelle addition et/ou à la suppression d'une interface (2, 3, 4, 5) de réseau physique ou virtuelle dans le fonctionnement du système (1), par le fait qu'un système de fonctionnement se déroulant sur le système annonce un événement correspondant au module (10) d'autoconfiguration.

11. Système suivant la revendication 10,
**caractérisé en ce que** le module (10) d'autoconfiguration est constitué et/ou agencé pour remplacer un ou plusieurs emplacements prévus dans le fichier (12, 13, 14) modèle par au moins un paramètre appartenant aux ou à l'interface (2, 3, 4, 5) de réseau concernée respectivement et obtenir ainsi la description (18) de configuration.

12. Système suivant la revendication 10 ou 11,
**caractérisé en ce que** le module (10) d'autoconfiguration est constitué et/ou agencé pour choisir le fichier (12, 13, 14) modèle parmi une pluralité de fichiers (12, 13, 14) modèles différents.

13. Système suivant la revendication 12,
**caractérisé en ce que** le module (10) d'autoconfiguration est constitué et/ou agencé pour effectuer le choix à l'aide de règles de filtrage contenues dans les fichiers (12, 13, 14) modèles.

14. Système suivant la revendication 12 ou 13,
**caractérisé en ce que**, pour plusieurs types d'interfaces (2, 3, 4, 5) de réseau physiques et/ou virtuelles, que peut comporter le système (1), respectivement au moins un fichier (12, 13, 14) modèle du système (1) est mis en mémoire et/ou **en ce que**, pour au moins trois types différents d'interfaces (2, 3, 4, 5) de réseau physiques et/ou virtuelles, respectivement au moins un fichier (12, 13, 14) modèle du système (1) est mis en mémoire.

15. Système suivant l'une des revendications 10 à 14, **caractérisé en ce qu'**un module (23) de contrôleur de conteneur du système (1) est constitué et/ou agencé pour produire le au moins un conteneur (21, 22, 25) de communication.

16. Système suivant l'une des revendications 10 à 15,
**caractérisé en ce que** le système (1) est constitué et/ou agencé, de manière à ce qu'une application du au moins un conteneur (21, 22, 25) de communication mette à disposition, suivant la première description (19) partielle de configuration, des fonctions d'un routeur IPv6 et/ou NAT64 et/ou d'un service de dénomination client ou d'un serveur de service de dénomination client et/ou d'un pont-routeur et/ou soit donnée par un logiciel pour un point d'accès WLAN ou en comprenne un.

17. Système suivant l'une des revendications 10 à 16,
**caractérisé en ce que** le système (1) est constitué et/ou agencé, pour dans le cas où on annonce au module (10) d'autoconfiguration qu'une interface (2, 3, 4, 5) de réseau physique ou virtuelle est supprimée dans le fonctionnement du système (1), le module (10) d'autoconfiguration provoque la suppression et/ou la désactivation de fonctions de réseau et/ou l'arrêt de conteneur de communication pour l'interface (2, 3, 4, 5) de réseau concernée.

18. Système suivant l'une des revendications 10 à 17,
**caractérisé en ce que** le module (10) d'autoconfiguration est constitué et/ agencé pour établir, pour au moins une autre des interfaces (2, 3, 4, 5) de réseau concernée, une description (18) de configuration de réseau, qui concerne au moins un réseau virtuel et/ou au moins un bridge virtuel et/ou au moins un switch virtuel pour la au moins une autre interface (2, 3, 4, 5) de réseau et ne concerne pas de conteneur de communication pour celle-ci.

19. Support, déchiffrable par ordinateur, qui comprend des instructions qui, lorsqu'elles sont exécutées sur au moins un ordinateur, font que le au moins un ordinateur effectue le procédé suivant les revendications 1 à 9.
